# EUROPEAN PATENT APPLICATION

(11) **EP 3 944 717 A1**
(43) Date of publication of application: **26.01.2022**
(21) Application number: 20187424.5
(22) Date of filing: 23.07.2020
(51) Int. Cl.: H04W 76/27

(54) **USER EQUIPMENT AND BASE STATION INVOLVED IN TRANSMISSION OF SMALL DATA**

(71) Applicant: Panasonic Intellectual Property Corporation of America, Torrance, CA 90503 (US)
(72) Inventor: SHAH, Rikin, 63225 Langen (DE); SUZUKI, Hidetoshi, Osaka-shi, Osaka 540-6207 (JP); TAO, Ming-Hung, 63225 Langen (DE); TEO, Tiong Hou, 469332 Singapore (SG)
(74) Representative: Grünecker Patent- und Rechtsanwälte PartG mbB

(57) **Abstract**

The present disclosure relates to a user equipment (UE), comprising the following. A processor of the UE determines that transmission of small data is to be performed by the UE to a base station. The UE is in an inactive state out of a connected state, an idle state and the inactive state. A transmitter of the UE performs transmission of the small data. The processor determines whether to transmit a preferred-UE-state indication to the base station, wherein the preferred-UE-state indication indicates the connected state to be the preferred UE-state of the UE. The determination whether to transmit the preferred-UE-state indication indicating a connected state is based on a characteristic relating to the small data. The transmitter, when the processor determines to transmit the preferred-UE-state indication, performs the transmission of the small data with the preferred-UE-state indication to the base station.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the next generation cellular technology, which is also called fifth generation (5G).

One objective is to provide a single technical framework addressing all usage scenarios, requirements and deployment scenarios (see e.g. section 6 of TR 38.913 version 15.0.0), at least including enhanced mobile broadband (eMBB), ultra-reliable low-latency communications (URLLC), massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

### SUMMARY

One non-limiting and exemplary embodiment facilitates providing procedures for facilitating a UE to perform an improved small-data-transmission procedure.

In an embodiment, the techniques disclosed here feature a user equipment comprising the following. A processor of the UE determines that transmission of small data is to be performed by the UE to a base station. The UE is in an inactive state out of a connected state, an idle state and the inactive state. A transmitter of the UE performs transmission of the small data. The processor determines whether to transmit a preferred-UE-state indication to the base station, wherein the preferred-UE-state indication indicates the connected state to be the preferred UE-state of the UE. The determination whether to transmit the preferred-UE-state indication indicating a connected state is based on a characteristic relating to the small data. The transmitter, when the processor determines to transmit the preferred-UE-state indication, performs the transmission of the small data with the preferred-UE-state indication to the base station.

It should be noted that general or specific embodiments may be implemented as a system, a method, an integrated circuit, a computer program, a storage medium, or any selective combination thereof. For instance, an integrated circuit can control a process of a UE or base station.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC,
- **Fig. 3**: is a sequence diagram for RRC connection setup/reconfiguration procedures,
- **Fig. 4**: is a schematic drawing showing usage scenarios of Enhanced mobile broadband (eMBB), Massive Machine Type Communications (mMTC) and Ultra Reliable and Low Latency Communications (URLLC),
- **Fig. 5**: is a block diagram showing an exemplary 5G system architecture for a non-roaming scenario,
- **Fig. 6 and 7**: illustrate the contention-based and contention-free RACH procedure;
- **Fig. 8**: illustrates the possible RRC state changes,
- **Fig. 9**: illustrates a message exchange for the RRC Resume procedure,
- **Fig. 10**: illustrates a message exchange for the RRC Release procedure,
- **Fig. 11**: illustrates a message exchange of the prior art for uplink data transmission, including a state change of the UE from Inactive to Connected state;
- **Fig. 12 and 13**: illustrate an exemplary four-step RACH respectively two-step RACH usable for small-data uplink transmissions for an RRC_INACTIVE UE,
- **Fig. 14**: illustrates an exemplary and simplified structure of a UE and gNB,
- **Fig. 15**: illustrates a structure of the UE according to an exemplary implementation of an improved small-data uplink transmission procedure,
- **Fig. 16**: is a flow diagram for the UE behavior, according to an exemplary implementation of the improved small-data uplink transmission procedure,
- **Fig. 17**: illustrates a structure of the base station according to an exemplary implementation of the improved small-data uplink transmission procedure,
- **Fig. 18**: is a flow diagram for the base station behavior, according to an exemplary implementation of the improved small-data uplink transmission procedure,
- **Fig. 19**: is a signaling diagram illustrating small-data transmissions from the UE to the base station, according to an exemplary implementation of the improved small-data uplink transmission procedure,
- **Fig. 20**: is a flow diagram for the base station behavior according to another exemplary implementation of the improved small-data uplink transmission procedure,
- **Fig. 21**: is a signaling diagram illustrating small-data transmissions from the UE to the base station, according to an exemplary implementation of the improved small-data uplink transmission procedure where the base station performs the determination,
- **Fig. 22**: is a flow diagram for the UE behavior, according to a first solution of an exemplary implementation of the improved small-data uplink transmission procedure,
- **Fig. 23**: is a signaling diagram illustrating small-data transmissions from the UE to the base station, according to a first solution of an exemplary implementation of the improved small-data uplink transmission procedure,
- **Fig. 24**: is a flow diagram for the base station behavior according to a first solution of an exemplary implementation of the improved small-data uplink transmission procedure where the base station performs the determination,
- **Fig. 25**: is a signaling diagram illustrating small-data transmissions from the UE to the base station, according to a first solution of an exemplary implementation of the improved small-data uplink transmission procedure where the base station performs the determination,
- **Fig. 26**: is a flow diagram for the UE behavior, according to a second solution of an exemplary implementation of the improved small-data uplink transmission procedure,
- **Fig. 27**: is a signaling diagram illustrating small-data transmissions from the UE to the base station, according to a second solution of an exemplary implementation of the improved small-data uplink transmission procedure,
- **Fig. 28**: is a flow diagram for the UE behavior, according to a third solution of an exemplary implementation of the improved small-data uplink transmission procedure, and
- **Fig. 29**: is a signaling diagram illustrating small-data transmissions from the UE to the base station, according to a third solution of an exemplary implementation of the improved small-data uplink transmission procedure.

### DETAILED DESCRIPTION

### 5G NR system architecture and protocol stacks

3GPP has been working at the next release for the 5^{th} generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

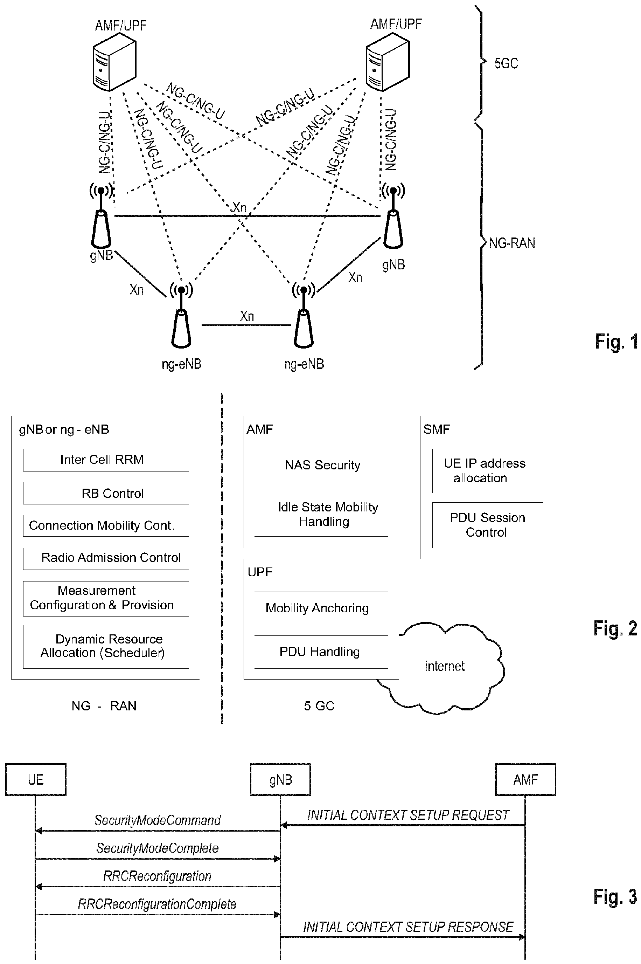

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v16.1.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.2.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

Fig. 2 illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

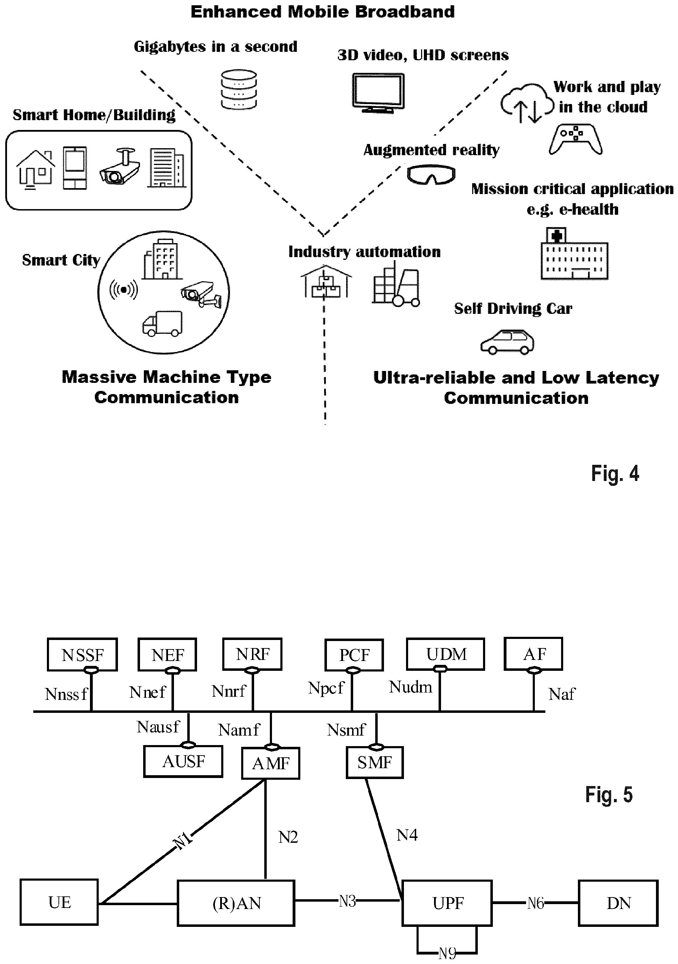

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913 version 15.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.3.0, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and control circuitry, which, in operation, performs the services using the established PDU session.

### Random Access procedure

Similar to LTE, 5G NR provides a RACH (Random Access Channel) procedure (or simply random access procedure). For instance, the RACH procedure can be used by the UE to access a cell it has found. The RACH procedure can also be used in other contexts within NR, for example:
- For handover, when synchronization is to be established to a new cell;
- To reestablish uplink synchronization to the current cell, if synchronization has been lost due to a too long period without any uplink transmission from the device;
- To request uplink scheduling, if no dedicated scheduling request resource has been configured for the device.

There are numerous events that may trigger the UE to perform a random access procedure (see 3GPPTS 38.300, v16.1.0 section 9.2.6), including the following. The random access procedure is triggered by a number of events:
- Initial access from RRC_IDLE;
- RRC Connection Re-establishment procedure;
- DL or UL data arrival during RRC_CONNECTED when UL synchronisation status is "non-synchronised";
- UL data arrival during RRC_CONNECTED when there are no PUCCH resources for SR available;
- SR failure;
- Request by RRC upon synchronous reconfiguration (e.g. handover);
- Transition from RRC_INACTIVE;
- To establish time alignment for a secondary TAG;
- Request for Other SI (see clause 7.3);
- Beam failure recovery;
- Consistent UL LBT failure on SpCell.

A mobile terminal can be scheduled for uplink transmission, if its uplink transmission is time synchronized. Therefore, the Random Access Channel (RACH) procedure plays a role as an interface between non-synchronized mobile terminals (UEs) and the orthogonal transmission of the uplink radio access. For instance, the Random Access is used to achieve uplink time synchronization for a user equipment, which either has not yet acquired, or has lost, its uplink synchronization. Once a user equipment has achieved uplink synchronization, the base station can schedule uplink transmission resources for it. One scenario relevant for random access is where a user equipment in RRC_CONNECTED state, handing over from its current serving cell to a new target cell, performs the Random Access Procedure in order to achieve uplink time-synchronization in the target cell.

There can be at least two types of random access procedures, allowing access to be either contention based (i.e. implying an inherent risk of collision), or contention free (non-contention based). An exemplary definition of a random access procedure can be found in 3GPP TS 38.321, v16.0.0 section 5.1.

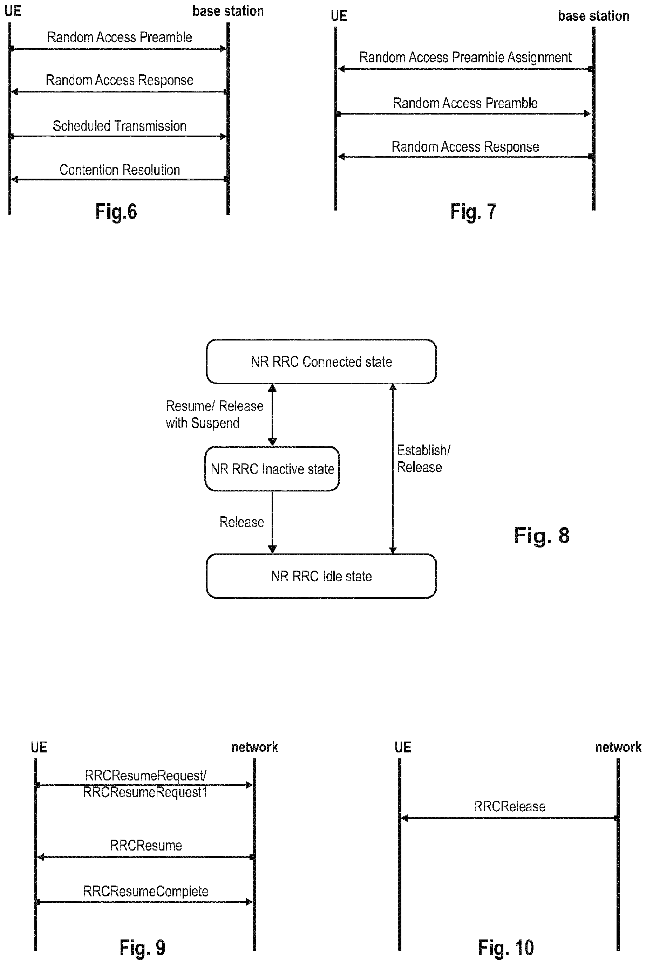

The RACH procedure will be described in the following in more detail, with reference to **Fig. 6 and 7****.** In the following, the contention-based random access procedure is being described in more detail with respect to **Fig. 6****.** This procedure consists of four "steps" and thus can be termed for example as a 4-step RACH procedure. First, the user equipment transmits a random access preamble on the Physical Random Access Channel (PRACH) to the base station (i.e. message 1 of the RACH procedure). After the base station has detected a RACH preamble, it sends a Random Access Response (RAR) message (message 2 of the RACH procedure) on the PDSCH (Physical Downlink Shared Channel) addressed on the PDCCH with the (Random Access) RA-RNTI identifying the time-frequency and slot in which the preamble was detected. If multiple user equipments transmitted the same RACH preamble in the same PRACH resource, which is also referred to as collision, they would receive the same random access response message. The RAR message may convey the detected RACH preamble, a timing alignment command (TA command) for synchronization of subsequent uplink transmissions based on the timing of the received preamble, an initial uplink resource assignment (grant) for the transmission of the first scheduled transmission and an assignment of a Temporary Cell Radio Network Temporary Identifier (T-CRNTI). This T-CRNTI is used by the base station to address the mobile(s) whose RACH preamble was detected until the RACH procedure is finished, because the "real" identity of the mobile at this point is not yet known by the base station.

The user equipment monitors the PDCCH for reception of the random access response message within a given time window (e.g. termed RAR reception window), which can be configured by the base station. In response to the RAR message received from the base station, the user equipment transmits the first scheduled uplink transmission on the radio resources assigned by the grant within the random access response. This scheduled uplink transmission conveys the actual message with certain functionality such as the RRC Connection Request, a RRC Resume Request or the buffer status report.

In case of a preamble collision having occurred in the first message of the RACH procedure(i.e. multiple user equipment have sent the same preamble on the same PRACH resource), the colliding user equipments will receive the same T-CRNTI within the random access response and will also collide in the same uplink resources when transmitting their scheduled transmission in the third step of the RACH procedure. In case the scheduled transmission from one user equipment is successfully decoded by the base station, the contention remains unsolved for the other user equipment(s). For resolution of this type of contention, the base station sends a contention resolution message (a fourth message) addressed to the C-RNTI or Temporary C-RNTI. This concludes the procedure.

**Fig. 7** is illustrating the contention-free random access procedure, which is simplified in comparison to the contention-based random access procedure. The base station provides in a first step the user equipment with the dedicated preamble to use for random access so that there is no risk of collisions, i.e. multiple user equipments transmitting the same preamble. Accordingly, the user equipment subsequently sends the preamble that was signaled by the base station in the uplink on a PRACH resource. Since the case that multiple UEs are sending the same preamble is avoided for a contention-free random access, essentially, a contention-free random access procedure is finished after having successfully received the random access response by the UE.

3GPP also defines a 2-step (contention-based) RACH procedure for 5G NR, where a message 1 (termed as MsgA), that corresponds to messages 1 and 3 in the four-step LTE/NR RACH procedure, is transmitted at first. The MsgA of the 2-step RACH type includes a preamble on the Physical Random Access Channel (PRACH) and a payload on the Physical Uplink Shared Channel (PUSCH). After MsgA transmission, the UE monitors for a response from the gNB within a configured time window. Then, the gNB will respond with a message 2 (termed as MsgB), corresponding to messages 2 and 4 of the 4-step LTE/NR RACH procedure. This MsgB can include e.g. a Success random access response (RAR), a Fallback RAR, and optionally a backoff indication. If contention resolution is successful upon receiving the Success RAR, the UE ends the random access procedure; while if Fallback RAR is received in MsgB, the UE performs message 3 transmission (as in 4-step RACH procedure) and monitors contention resolution. Some further exemplary assumptions are made for the 2-step RACH procedure, such as that the UE, after deciding on the RACH type (e.g. the 2-step RACH), keeps retrying that same RACH type until failure. But there may be also the possibility that the UE can switch to the 4-step RACH procedure after certain reattempts of transmitting MsgA.

Moreover, the network may semi-statically determine radio resources, to be used for performing the 2-step RACH procedure and the 4-step RACH procedure, that are exclusive from one another. The radio resources used for transmitting the first message in the RACH procedure include at least the RACH occasion as well as the preambles. For instance, in the 2-step RACH procedure, the first message MsgA uses not only the PRACH resource (e.g. the RACH occasion and preamble) but also the associated PUSCH resources.

Generally, for RACH preambles, see for example, 3GPP TS 38.211 V16.2.0, "Table 6.3.3.2-2: Random access configurations for FR1 and paired spectrum/supplementary uplink" and section 6.3.3.2, "Mapping to physical resources".

### RRC States (RRC_Connected, RRC_Inactive)

In LTE, the RRC state machine consisted of only two states, the RRC idle state (mainly characterized by high power savings, UE autonomous mobility and no established UE connectivity towards the core network) and the RRC connected state in which the UE can transmit user plane data while mobility is network-controlled to support lossless service continuity. In connection with 5G NR, the LTE-related RRC state machine is extended with an inactive state (see e.g. TS 38.331 v16.0.0, Figure 4.2.1-2), as explained in the following.

The RRC in NR 5G (see TS 38.331, section 4) supports the following three states, RRC Idle, RRC Inactive, and RRC Connected. A UE is either in RRC_CONNECTED state or in RRC_INACTIVE state when an RRC connection has been established. If this is not the case, i.e. no RRC connection is established, the UE is in RRC_IDLE state. The following state transitions are possible as illustrated in **Fig. 8****:**
- from RRC_IDLE to RRC_CONNECTED, following e.g. the "connection establishment" procedure;
- from RRC_CONNECTED to RRC_IDLE, following e.g. the "connection release" procedure;
- from RRC_CONNECTED to RRC_INACTIVE, following e.g. the "connection release with suspend" procedure;
- from RRC_INACTIVE to RRC_CONNECTED, following e.g. the "connection resume" procedure;
- from RRC_INACTIVE to RRC_IDLE (uni-directional), following e.g. the "connection release" procedure.

The new RRC state, RRC Inactive, is defined for the new radio technology of 5G 3GPP, so as to provide benefits when supporting a wider range of services such as the eMBB (enhanced Mobile Broadband), mMTC (massive Machine Type Communications) and URLLC (Ultra-Reliable and Low-Latency Communications) which have very different requirements in terms of signalling, power saving, latency etc. The new RRC Inactive state shall thus be designed to allow minimizing signaling, power consumption and resource costs in the radio access network and core network while still allowing e.g. to start data transfer with low delay.

According to an exemplary 5G NR implementation, the different states are characterized as follows (see section 4.2.1 of TS 38.331):
***"RRC_IDLE:***
   - *A UE specific DRX may be configured by upper layers;*
   - *UE controlled mobility based on network configuration;*
   - *The UE:*
      - *Monitors Short Messages transmitted with P-RNTI over DCI (see clause 6.5);*
      - *Monitors a Paging channel for CN paging using 5G-S-TMSI;*
      - *Performs neighbouring cell measurements and cell (re-)selection;*
      - *Acquires system information and can send SI request (if configured).*
*- **RRC_INACTlVE:***
   - *A UE specific DRX may be configured by upper layers or by RRC layer;*
   - *UE controlled mobility based on network configuration;*
   - *The UE stores the UE Inactive AS context;*
   - *A RAN-based notification area is configured by RRC layer;*
   *The UE:*
   - *Monitors Short Messages transmitted with P-RNTI over DCI (see clause 6.5);*
   - *Monitors a Paging channel for CN paging using 5G-S-TMSI and RAN paging using fulll-RNTI;*
   - *Performs neighbouring cell measurements and cell (re-)selection;*
   - *Performs RAN-based notification area updates periodically and when moving outside the configured RAN-based notification area;*
   - *Acquires system information and can send SI request (if configured).*
*- **RRC_CONNECTED:***
   - *The UE stores the AS context;*
   - *Transfer of unicast data to*/*from UE;*
   - *At lower layers, the UE may be configured with a UE specific DRX;*
   - *For UEs supporting CA, use of one or more SCells, aggregated with the SpCell, for increased bandwidth;*
   - *For UEs supporting DC, use of one SCG, aggregated with the MCG, for increased bandwidth;*
   - *Network controlled mobility within NR and to*/*from E-UTRA;*
   - *The UE:*
      - *Monitors Short Messages transmitted with P-RNTI over DCI (see clause 6.5), if configured;*
      - *Monitors control channels associated with the shared data channel to determine if data is scheduled for it;*
      - *Provides channel quality and feedback information;*
      - *Performs neighbouring cell measurements and measurement reporting;*
      - *Acquires system information."*

According to the characteristics of the RRC Inactive state, for the Inactive UE the connection (both for user plane and control plane) is maintained with RAN and the core network. More specifically, in RRC Inactive, although the connection still exists, it is suspended, or put differently the connection is not active anymore. On the other hand, in RRC Connected state, the connection exists and is active, e.g. in the sense that it is used for a data transmission. In RRC Idle state, the UE has no RRC connection with the RAN and the core network, which also means that e.g. the radio base station does not have any context of the UE and e.g. does not know the identification of the UE and does not have security parameters relating to the UE to be able to properly decode data transmitted by the UE (security e.g. ensures integrity of the transmitted data). UE context may be available in the core network, but would have to be fetched first by the radio base station.

In addition, the paging mechanism (may also be called e.g. notification mechanism) for user equipments in the radio cell is based on so called radio access network, RAN,-based notification areas (in short RNAs). The radio access network should be aware of the current RNA the user equipment is located in, and the user equipment may assist the gNB to track the UE moving among various RNAs. The RNA can be UE-specific.

One example of an RRC resume procedure to move the UE from the RRC_Inactive state to the RRC_Connected state (see TS 38.331 section 5.3.13) is explained in the following with reference to Fig. 9. The purpose of this procedure is to resume a suspended RRC connection (may include resuming signaling and data radio bearers) or to perform the RNA update upon the UE moving out of the configured RNA.

The procedure allows to transmit either the RRCResumeRequest message or the RRCResumeRequest1 message. When transmitting the RRCResumeRequest message, the short I-RNTI (e.g. truncated I-RNTI) is used as the UE identity (exemplary termed *"resumeldentity"*). When transmitting the RRCResumeRequest1 message, the full I-RNTI is used as the UE identity (exemplary termed *"resumeldentity"*). UE checks the indication *"useFullResumeID"* in SIB1 and determines to transmit either the RRCResumeRequest or the RRCResumeRequest1 message. If the *"useFullResumeID"* indicates "true", the UE will transmit RRCResumeRequest1 with full I-RNTI; otherwise, the UE will transmit RRCResumeRequest with short I-RNTI. The actions the UE performs for the RRC Resume procedure (see section 5.3.13.4 of TS 38.331) include resuming the SRB2 and all DRBs (which were suspended when entering the RRC Inactive state, see below release procedure).

One example of a subsequent RRC connection release procedure to transition the UE from the RRC_Connected state to the RRC Inactive state (see TS 38.331 section 5.3.8) is explained in the following with reference to **Fig. 10****.** The purpose of this procedure is to release the RRC connection or to suspend the RRC connection. For instance, the network initiates the RRC connection release procedure to transit a UE in RRC_CONNECTED to RRC_IDLE or to RRC_INACTIVE. The actions the UE performs for the RRC Connection Release procedure (see section 5.3.8.3 of TS 38.331) include suspending all SRB(s) (Signaling Radio Bearers) and DRB(s) (Data Radio Bearers) except SRB0, in case the release is done with suspend (e.g. "*RRCRelease* includes *suspendConfig"*). Correspondingly, the UE in RRC Inactive state does not have any non-suspended or active DRB (UE only has suspended DRBs). SRB0, which is kept active, even in the RRC Inactive state, can be used by the UE e.g. for performing the RACH procedure, e.g. when carrying RRC messages, such as the RRCResumeRequest, RRCResumeRequest1, RRCSetupRequest.

In an exemplary implementation in 5G NR, signaling radio bearers (see TS 38.331 section 4.2.2) are defined as radio bearers that are used only for the transmission of RRC and NAS messages, and may include SRB0 (for RRC messages using the CCCH logical channel), SRB1, SRB2, and SRB3. In an exemplary implementation in 5G NR (see TS 38.300 section 12.1), the NG-RAN establishes at least one DRB together with the PDU Session, and additional DRB(s) for QoS flow(s) of that PDU session can be subsequently configured. The NG-RAN then maps packets belonging to different PDU sessions to different DRBs. NG-RAN and 5GC ensure quality of service (e.g. reliability and target delay) by mapping packets to appropriate QoS Flows and DRBs. Put differently, a DRB is used to carry user data associated with a PDU session. Radio bearers are categorized into two groups: data radio bearers (DRB) for user plane data and signalling radio bearers (SRB) for control plane data.

### Small-data transmissions

The characteristics of the small-data transmissions that are targeted in this disclosure refer to any service with the characteristics that data bursts in UL/DL are small and optionally rather infrequent with no strict requirements on delay. For instance, a single data transmission that it so small that it can be sent by the UE in one transmission (e.g. in RACH, see below) can be considered a small-data transmission. Typical non-limiting examples of traffic characteristics are captured in the following table (see TR 25.705 v13.0.0 section 5).

### Characteristics of the small-data transmissions

| **Traffic parameter** | **Value** |
|---|---|
| application packet size | 100 bytes (UL); 100 bytes (DL) |
| latency¹ | 5s to 30min; 1 hour for no mobility (static, pedestrian) |
| frequency | every minute and up to monthly |
| NOTE 1: latency is the duration from when the packet arrives at the buffer until it is completely transmitted (delay tolerance of the application). | |

Another possible exemplary definitions can depend on the configuration of the gNB. For instance, the gNB can define that data below a certain threshold (e.g. 1000 kbyte) can be considered small-data, whereas data above that threshold is not to be considered small-data. This threshold could e.g. be defined in connection with the buffer status.

Alternatively, a definition of what small-data is could also be fixed by a suitable standard, e.g. providing a similar data amount threshold as described above.

### Small-data transmission by UE in RRC Inactive state

In more detail, 5G NR supports the RRC_INACTIVE state, and UEs with infrequent (periodic and/or non-periodic) data transmission are generally maintained by the network in the RRC_INACTIVE state. Until Rel-16, the RRC_INACTIVE state does not support data transmission. Hence, the UE has to resume the connection (e.g. move to RRC_CONNECTED state) for any DL (MobileTerminated) and UL (MobileOriginated) data. Connection setup (or resume) and subsequently release to RRC_INACTIVE state would have to happen for each data transmission, however small and infrequent the data packets are. This results in unnecessary power consumption and signalling overhead.

Specific examples of small and infrequent data traffic include the following use cases:
- Smartphone applications:
   ∘ Traffic from Instant Messaging services (whatsapp, QQ, wechat etc.)
   ∘ Heart-beat/keep-alive traffic from IM/email clients and other apps
   ∘ Push notifications from various applications
- Non-smartphone applications:
   ∘ Traffic from wearables (periodic positioning information etc.)
   ∘ sensors (Industrial Wireless Sensor Networks transmitting temperature, pressure readings periodically or in an event triggered manner etc.)
   ∘ smart meters and smart meter networks sending periodic meter readings

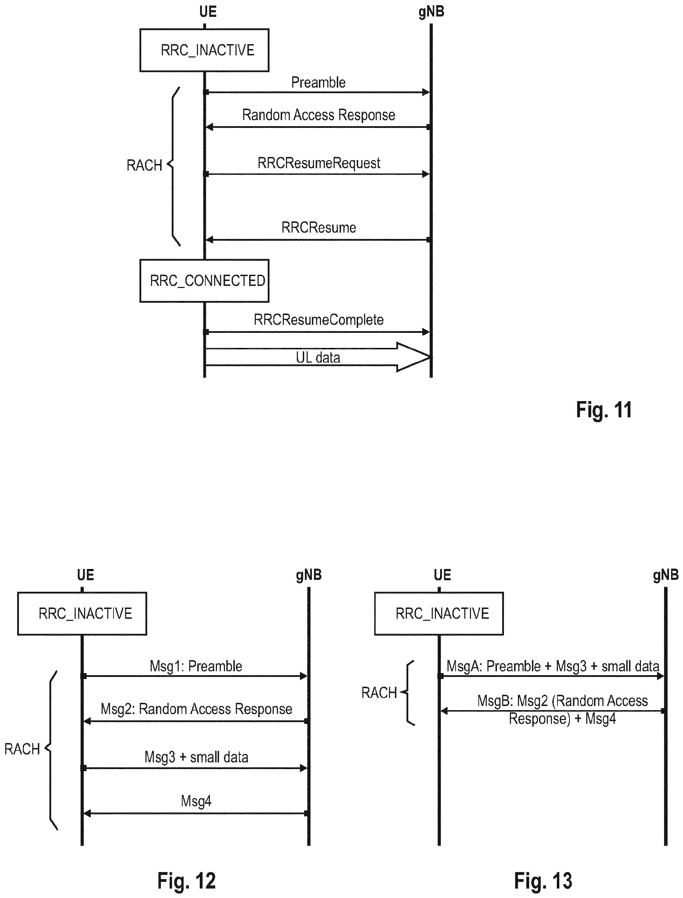

An exemplary procedure of the prior art (in this case a 5G-NR-compliant prior art solution) to enable a UE in the RRC Inactive state to transmit (small) data will be briefly explained in the following with reference to **Fig. 11****.** As apparent from the figure, the UE is assumed to be in RRC_Inactive state, which may e.g. involve that the UE (and gNB) has all data radio bearers suspended, and that no data can be transmitted to the gNB. In order to enable the UE to transmit data, the UE has to be first transitioned into the RRC Connected state, which can be done by the UE requesting to resume the RRC connection (here transmitting *RRCResumeRequest*) as part of the RACH procedure (in Fig. 11, e.g. using the 4-step RACH procedure).

In detail, the UE may transmit the preamble to the current gNB, then receives a corresponding random access response with a small UL grant of radio resources, which are used by the UE to transmit the RRCResumeRequest message as msg3 of the RACH procedure.

Finally, the new gNB provides the RRCResume message to the UE, which in turnthen transitions to the RRC Connected state, including the resumption of all data radio bearers. In RRC_Connected state, the UE is then able to transmit the UL data.

It is not yet defined how and when the gNB decides that a UE should indeed by transitioned to RRC_CONNECTED state. The control in said respect is likely to still rest with the gNB, although the UE might request to resume the RRC connection. One exemplar possibility is that the gNB takes into account the buffer status report, which the UE transmits e.g. in the Msg 3 or MsgA, to decide whether the UE should transition to the RRC_CONNECTED state or not. The buffer status report indicates the actual amount of data in the UE buffer. For instance, if the buffer status report indicates a large amount of data in the UE buffer, the gNB might decide to transition the UE from RRC_INACTIVE to RRC_CONNECTED state. On the other hand, if the buffer status report indicates only little amount of data in the UE buffer, the gNB might decide to keep the UE in the RRC_INACTIVE state.

As can be appreciated from the description of Fig. 11, the above process, according to which the UE first needs to transition from the inactive state to the connected state such that the UE can send any user data in the uplink, introduces latency and consumes significant UE power for each transmission of user data. Moreover, the signalling overhead caused for INACTIVE-state UEs when transmitting small data packets is a general problem, and will even be exacerbated with more UEs in 5G NR.

Therefore, 3GPP is intending to enable the RRC_Inactive UE to transmit small data in the uplink without changing the UE state. In general, any device that has intermittent small data packets, when in the INACTIVE state, will benefit from enabling small-data transmission in the INACTIVE state.

In 3GPP, however, no final agreements have been reached for a standardized method on how the transmission of (small) data can be enabled for a UE that stays in the RRC Inactive state.

### Further improvements

The inventors have identified potential problems in connection with the above.

One possibility for a UE to transmit small data in the uplink when still in RRC_INACTIVE state is to use the RACH procedure. Although the RACH procedure has been discussed as a possible basis for small-data uplink transmissions by UEs in RRC_INACTIVE state, no agreements have been reached in the 3GPP and no 3GPP standards seems to provide definitions in said respect. Consequently, the following assumptions, made for Fig. 12 and 13 and also for subsequently describing the concepts, solutions and variants of the invention, are to be considered only as exemplary and not as limiting the small-data uplink transmission according to the invention. For instance, a non-RACH-based transmission of the small data in the uplink is also possible.

Moreover, even when assuming a RACH-based small-data uplink transmission as an example, the UE can use either the 2-step RACH or 4-step RACH to send small data in the uplink, (see MsgA or Msg3).

Simplified and exemplary RACH-based small-data uplink transmission procedures are illustrated in Fig. 12 and 13. **Fig. 12** assumes a 4-step RACH procedure and illustrates how the UE transmits the small data with the Msg3. **Fig. 13** assumes a 2-step RACH procedure and illustrates how the UE transmits the small data with the MsgA.

According to one example, the control message and the small data are transmitted together to the base station, e.g. together in the same transport block, where the UE bilds the transport block using the resources and multiplexing data and signaling together in the same transport block of the MAC layer. For instance, the control message (e.g. the *RRCResumeRequest*) of Msg3 or MsgA can be transmitted via a signaling connection (e.g. a signaling radio bearer; e.g. the SRB0) that is maintained for a UE in the RRC_Inactive state (maintained by both the UE and the gNB). Furthermore, the small data of Msg3 or MsgA can be transmitted e.g. via a data connection (e.g. a data radio bearer) that is maintained for a UE in the RRC_Inactive state (maintained by both the UE and the gNB).

According to one specific example of a RACH-based small-data uplink transmission, in order to allow small-data transmission in the RACH procedure, the network or network node may be enabled to configure multiple transport block sizes (TB sizes) for the small-data uplink transmission (PUSCH transmission; e.g. small-data transmission). The transport block sizes could e.g. be associated respectively with different RACH preambles. For instance, each one of different TB sizes is associated with or corresponds to a specific RACH preamble, as illustrated by the following Table 1.

**Table 1**

| **TB Size(bits)** | **RACH preamble** |
|---|---|
| X₁ | Z₁ |
| X₂ | Z₂ |
| X₃ | Z₃ |
| .... | .... |

Such an information could be e.g. broadcast by the gNB in the system information.

Accordingly, a UE may select a TB size (and, accordingly, the corresponding preamble) based on it buffers status (i.e. the data volume of small data that is to be transmitted). For instance, if a UE has a data volume Y to transmit, for which the TB size X₁ from Table 1 is suitable, the UE selects RACH preamble Z₁. This could apply to both the 4-step and 2-step RACH procedure.

Then, in case of the four-step RACH, the network (e.g. gNB) may provide the actual TB size in Msg3, e.g. a single TB size, such as the same X₁, or another TB size, such as X₂ or X₃. According to a different solution, the gNB may provide several options in Msg3, such as X₁=100 bits, X₂=200 bits, or X₃=300 bits, and the UE then selects the suitable TB size among those indicated by the gNB in the Msg3. The UE then uses the indicated or selected TB size to perform the small-data uplink transmission in Msg3.

On the other hand, for the 2-step RACH, the UE selects the TB size (from among a set of possible TB sizes) according to the amount of small-data to be transmitted. The UE then uses the selected TB size to perform the small-data uplink transmission in MsgA (the gNB is not able to indicate another TB size, in contrast to the 4-step RACH).

According to still another possible solution, the gNB might partition the PRACH resources so as to create a small-data-specific partition of PRACH resources that the UE can use for small-data uplink transmissions. For instance, a small-data-specific group of preambles is defined by the gNB. Such information could be provided by the gNB to all UEs in its cell using system information.

Correspondingly, the UE selects such a small-data-specific preamble when it determines to transmit small-data in the uplink. The gNB learns that the UE wants to transmit small data based on the selected preamble being a small-data-specific preamble. In return, the gNB might e.g. indicate a larger size of grant in Msg3 or indicates a plurality of different grant sizes in Msg3 (see above example of several options of TB sizes). The UE thus can use the indicated grant size in Msg3 to transmit the uplink data.

Another possible parameter that can be carried in the system information is a possible maximum allocated grant size of uplink data for the Msg3. In such an exemplary solution, if the data the UE wants to transmit stays below the maximum grant size, the UE can select from the available TB sizes in the small-data-specific PRACH resources and transmit same in the inactive state using the Msg3. Otherwise, if the data the UE wants to transmit is above the maximum grant size, the UE would have to send the data in the connected state and thus proceeds to request the transition from the gNB .

For instance, if the maximum grant size broadcast by the gNB in the system information is 800 kB, and the UE has 600 kB in its buffer, the UE will proceed to transmit the data in the inactive state, e.g. by using the RACH procedure. The gNB might allocate 400 kB in Msg2. The UE transmits 400 kB of the data in Msg3 and sends a buffer status report to the base station to indicate the remaining 200 kB in the buffer. The gNB might then transmit a further grant of uplink resource for use by the UE to transmit the remaining 200 kB.

In summary, a possible exemplary implementation of a small-data uplink transmission for RRC_INACTIVE UEs is possible and could be e.g. based on the RACH procedure, be it a 2-step or 4-step RACH procedure.

However, the inventors have also identified potential drawbacks when allowing small-data uplink transmissions for a UE in the RRC_INACTIVE state. Uplink transmissions in the RRC_INACTIVE state are typically disadvantageous compared to uplink transmissions in the RRC_CONNECTED state. For instance, in the above exemplary RACH-based solutions, the UE has to successfully perform a complete RACH procedure. Furthermore, the 4-step or 2-step RACH procedures used by the RRC_INACTIVE UE are contention-based, in that the preamble is selected by the UE from a pool of preambles (and possibly by some other UE) and in that the radio resources for the transmissions are selected by the UE from a pool of radio resources (and possibly selected by some other UE), which may cause a contention and may result in an unsuccessful RACH and/or small-data uplink transmission. This is turn may result in an increased power consumption as well as an increased signaling overhead.

The inventors have identified that in specific scenarios the drawbacks for the small-data uplink transmission for RRC_INACTIVE UEs may outweigh the drawbacks of transitioning the RRC_INACTIVE UE to the RRC_CONNECTED state, where the small-data uplink transmission is more likely to not suffer from the just-described drawbacks.

For instance, a scenario is assumed where an RRC_INACTIVE UE performs frequently such small-data uplink transmissions, but is not transitioned by the gNB to the RRC_CONNECTED state. As mentioned above, it is not specified in the 3GPP standards how and when the gNB decides to transition the RRC_INACTIVE UE to the RRC_CONNECTED state. One possibility could be that the gNB determines that there is more small data based on the buffer status report that the UE transmits (e.g. the Msg 3 or MsgA) and thus decides on that basis that the UE should transition to the RRC_CONNECTED state.

However, the UE might not transmit the buffer status report to the gNB, in case the complete small data is carried in the Msg3 or MsgA. As a result, the gNB might not have sufficient information to decide that the UE should be transitioned to RRC_CONNNECTED. In such a case, the UE would remain in RRC_INACTIVE and continue sending small-data in the uplink on a frequent basis.

Thus, the UE would frequently perform such RACH procedures for the small-data uplink transmissions, which would cause unnecessary power consumption and signaling overhead. In such scenarios, it would be beneficial to facilitate that the UE transitions to the RRC_CONNECTED state to perform the small-data uplink transmissions.

The present invention relates to solutions according to which a UE in the RRC_INACTIVE state is allowed to transmit data (e.g. small data) (without the immediate need to change the UE state into connected), while however facilitating that the UE transitions into the RRC_CONNECTED state in particular scenarios as described above.

The inventors have thus identified the possibility of providing an improved small-data transmission procedure that allows avoiding or mitigating the above-identified problems.

### Embodiments

In the following, UEs, base stations, and procedures to meet these needs will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology, but should be more broadly understood in terms of functions and concepts that underlie the functioning and principles of the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the UE and the base station is typically standardized and may be defined by different layers, such as PHY, MAC, RRC etc. (see above background discussion).

The term **"small data"** used in the application is to be broadly understood as data that the UE and the base station agree on being small, e.g. versus non-small. For instance, whether data is to be considered small-data or not, can be defined by a base station by setting a data amount threshold. Alternatively, what constitutes small-data can be defined by telecom standard, e.g. by setting a data amount threshold.

The term **"inactive state"** used in the application is to be broadly understood as a state in which regular data exchange between the UE and the base station is not possible. The UE, when in inactive state, may not have actively-used data connections, but still has one or more inactive data connections (e.g. could also be called existent but not currently-used) that allow a (small) data transmission without the need to resume the data connection first. For sake of completion, the UE in the idle state does not have data connections over which the UE could transmit data to the base station, while the UE in connected state has one or more active data connections that can be immediately used to carry data to the base station.

The term **"characteristic",** when used in connected with the small data, should be understood broadly as referring to a property that characterizes the small data. For instance, in a first solution the characteristic relates to frequency of the transmission of the small data; put differently, how frequently small-data transmissions are performed. In another solution, the characteristic relates to the data itself, such as a priority of the data or type of the data or an expected incoming time interval (can be different from the actual frequency of the small-data transmission).

The term **"frequency",** when used in connection with the transmission of small data, is generally to be understood as the number of times (quantity) per time period that a transmission of small data is performed, such as x times in y ms. Unless indicated differently, it should not be understood as a frequency in a frequency domain of time-frequency radio resources (such as a frequency band, MHz, etc.).

The term **"quantity",** when used in connection with the transmission of small data, is to be understood as referring to the number of times that a transmission of small data is performed, e.g. x times.

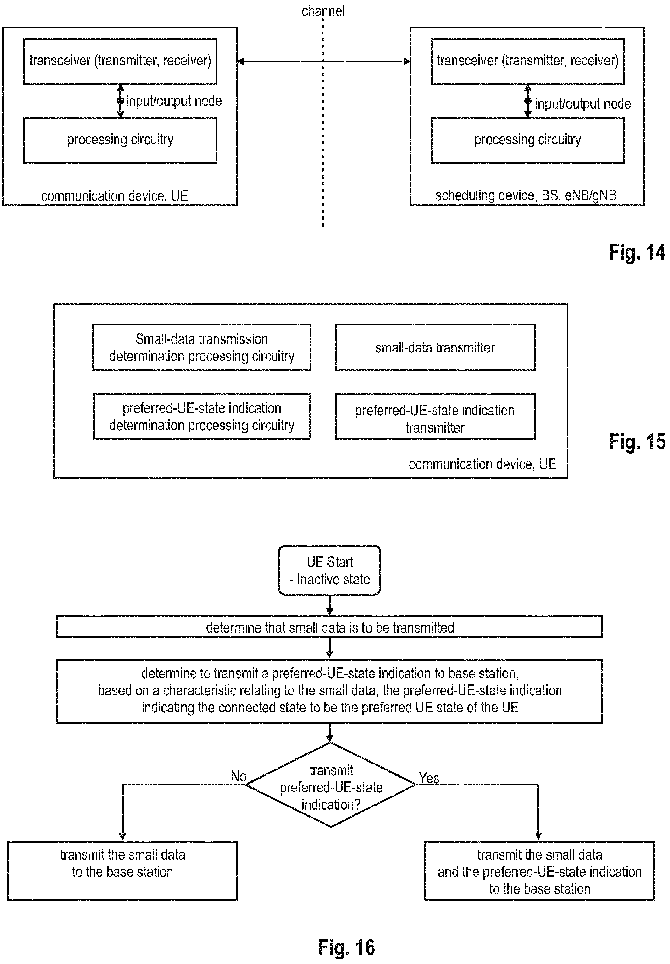

**Fig. 14** illustrates a general, simplified and exemplary block diagram of a user equipment (also termed communication device) and a scheduling device (here exemplarily assumed to be located in the base station, e.g. the eLTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

An improved small-data transmission procedure will be described in the following. In said connection, an improved UE and an improved base station are presented, which participate in the improved small-data transmission procedure. Corresponding methods for the UE behavior and the base station behavior are provided as well.

**Fig. 15** illustrates a simplified and exemplary UE structure according to one exemplary solution of the improved small-data transmission procedure, which can be implemented based on the general UE structure explained in connection with Fig. 14. The various structural elements of the UE illustrated in said figure can be interconnected between one another e.g. with corresponding input/output nodes (not shown) e.g. in order to exchange control and user data and other signals. Although not shown for illustration purposes, the UE may include further structural elements.

As apparent from Fig. 15, the UE may include processing circuitry for determining a small-data transmission, processing circuitry for determining the preferred-UE-state indication, a transmitter for transmitting small data, and a transmitter for transmitting a preferred-UE-state indication.

In the present case as will become apparent from the below disclosure, the receiver of the UE can thus be exemplarily configured to at least partly perform one or more of receiving configuration information from the base station, of receiving a UE-state instruction, etc.

Furthermore, in the present case as will become apparent from the below disclosure, the processing circuitry (also termed processor) of the UE can thus be exemplarily configured to at least partly perform one or more of determining that a transmission of small data is to be performed, of determining of whether or not to transmit a preferred-UE-state indication to the base station, of determining a characteristic relating to the small-data transmission, of operating a counter and timer and comparing same against corresponding limits or thresholds, etc.

Furthermore, in the present case as will become apparent from the below disclosure, the transmitter of the UE can thus be exemplarily configured to at least partly perform one or more of transmitting small data, of transmitting a preferred-UE-state indication, etc.

One exemplary solution as will be disclosed in more detail further below is implemented by a UE that includes the following. A processor of the UE determines that transmission of small data is to be performed by the UE to a base station. The UE is in an inactive state out of a connected state, an idle state and the inactive state. A transmitter of the UE performs transmission of the small data. The processor determines whether to transmit a preferred-UE-state indication to the base station, wherein the preferred-UE-state indication indicates the connected state to be the preferred UE-state of the UE. The determination whether to transmit the preferred-UE-state indication indicating a connected state is based on a characteristic relating to the small data. The transmitter, when the processor determines to transmit the preferred-UE-state indication, performs the transmission of the small data with the preferred-UE-state indication to the base station.

A corresponding sequence diagram for an exemplary UE behavior in line with the above-discussed UE is defined in the following and illustrated in **Fig. 16****.** The method comprises the following steps performed by a user equipment:
- determining that transmission of small data is to be performed by the UE to a base station, wherein the UE is in an inactive state out of a connected state, an idle state and the inactive state,
- performing transmission of the small data,
- determining whether to transmit a preferred-UE-state indication to the base station, wherein the preferred-UE-state indication indicates the connected state to be the preferred UE-state of the UE,
- wherein the determination whether to transmit the preferred-UE-state indication indicating a connected state is based on:
   - a characteristic relating to the small data,
- when the processor determines to transmit the preferred-UE-state indication, performing the transmission of the small data with the preferred-UE-state indication to the base station.

According to this improved small-data transmission procedure, the UE can assist in allowing to reduce the signaling overhead and the power consumption by indicating to the base station when the UE prefers to switch from an inactive state to a connected state in the context of transmitting small data. For instance, the UE follows a specific defined behavior when transmitting its preference on the UE state, such that the base station can then decide thereon, whether or not to transition the UE into the connected state.

For instance, the UE can participate in the improved small-data-transmission procedure by limiting the number of small-data transmission the UE should perform in the inactive state during a specific time period, before requesting a state change to the connected state.

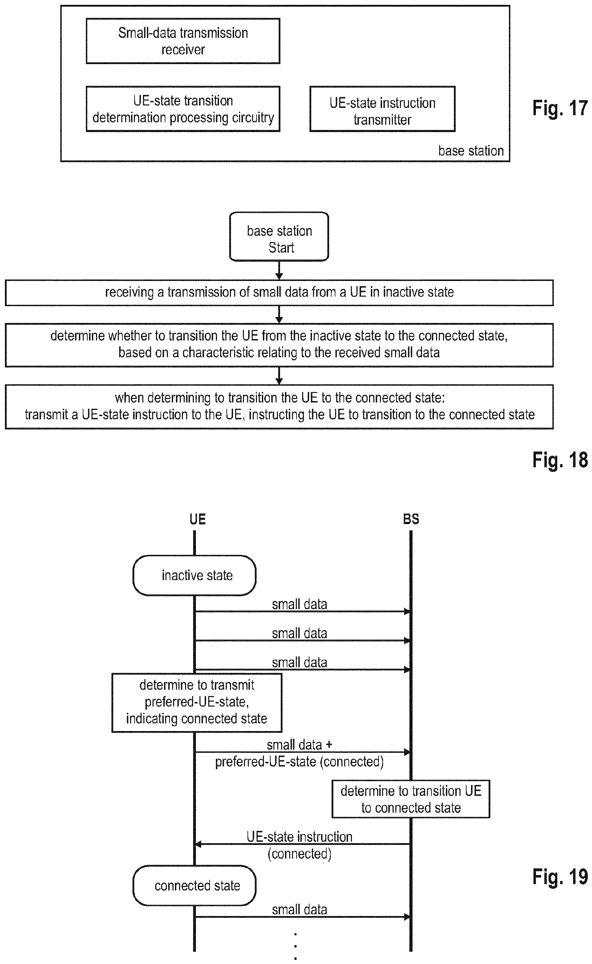

As already apparent from above, the improved small-data transmission procedure also provides an improved radio base station. **Fig. 17** illustrates a simplified and exemplary base station structure according to one exemplary solution of the improved small-data transmission procedure, and can be implemented based on the general base station structure explained in connection with Fig. 14. The various structural elements of the radio base station illustrated in said Fig. 17 can be interconnected between one another e.g. with corresponding input/output nodes (not shown) e.g. in order to exchange control and user data and other signals. Although not shown for illustration purposes, the base station may include further structural elements.

As apparent from Fig. 17, the base station may include a receiver for receiving small-data transmission(s), processing circuitry for determining a UE-state transition, and a transmitter for transmitting a UE-state instruction to the UE.

In the present case as will become apparent from the below disclosure, the receiver of the base station can thus be exemplarily configured to at least partly perform one or more of receiving small data from the UE, and of receiving a preferred-UE-state indication from the UE, etc.

In the present case as will become apparent from the below disclosure, the processing circuitry of the base station can thus be exemplarily configured to at least partly perform one or more of determining whether to transition the UE from the inactive state to the connected state, of determining a characteristic relating to the received small data, of operating a counter and timer and comparing same against corresponding limits or thresholds, etc.

In the present case as will become apparent from the below disclosure, the transmitter of the base station can thus be exemplarily configured to at least partly perform one or more of transmitting a UE-state instruction to the UE, etc.

One exemplary solution as will be disclosed in more detail further below is implemented by a radio base station that includes the following. A receiver of the base station receives a transmission of small data from a user equipment, UE, wherein the UE is in an inactive state out of a connected state, an idle state and the inactive state. A processor of the base station determines whether to transition the UE from the inactive state into the connected state, based on a characteristic relating to the received small data. A transmitter of the base station transmits a UE-state instruction to the UE, instructing the UE to transition to the connected state, when determining to transition the UE to the connected state.

A corresponding sequence diagram for an exemplary base station behavior in line with the above-discussed base station is illustrated in **Fig. 18****.** A corresponding method comprises the following steps performed by a base station:
- receiving a transmission of small data from a user equipment, UE, wherein the UE is in an inactive state out of a connected state, an idle state and the inactive state,
- determining whether to transition the UE from the inactive state into the connected state, based on:
   - a characteristic relating to the received small data,
- transmitting a UE-state instruction to the UE, instructing the UE to transition to the connected state, when determining to transition the UE to the connected state.

Correspondingly, the improved base station participates in the improved small-data transmission procedure so as to facilitate reducing the signaling overhead and power consumption, by determining to transition the UE from the inactive state to the connected state to perform the small-data transmission. For instance, the base station monitors the number of small-data transmissions the UE performs during a limited time period, and, if the UE performs small-data too frequently, the base station may decide to better transition the UE to the connected state for the further small-data transmission(s).

One solution of the improved small-data transmission procedure is exemplary illustrated in **Fig. 19****,** which shows a signaling exchange between the UE and the base station. It is exemplary assumed that the improved UE (not the improved base station) performs the determination of whether to transition the UE to the connected state based on the small-data characteristic, while the base station accordingly reacts on the preferred-UE-state indication provided by the UE.

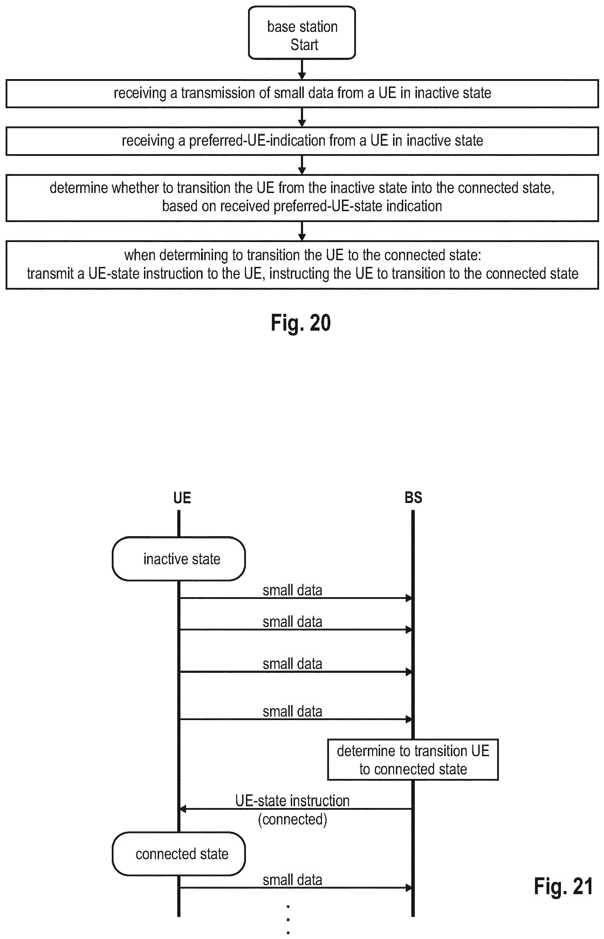

Such a simplified base station behavior is illustrated in **Fig. 20****,** in form of a sequence diagram. As apparent from Fig. 20, the base station receives the small-data transmissions from the UE as well as the preferred-UE-state indication. It is exemplarily assumed that the base station stays in control of whether the UE is to be transitioned to the connected state or not, and correspondingly, performs such a determination at least based on the received preferred-UE-state indication. In the positive case, i.e. the UE is to be transitioned to the connected state, the base station transmits an instruction to the UE so as to instruct same to transition to the connected state.

As apparent from Fig. 19, the UE is assumed to be already in the inactive state and to eventually start performing small-data transmissions. Furthermore, the UE at some point then determines that it would prefer to be transitioned to the connected state for continuing with the small-data transmissions. This determination is performed by the UE, based on a characteristic that relates to the transmission of the small data. More detailed solutions on how the UE determines whether to transition to the connected state or stay in the inactive state will be presented below (see first, second and third solutions).

Correspondingly, the UE determines to transmit a preferred-UE-state indication to the base station, which indicates that the UE prefers to be transitioned to the connected state. The UE thus performs a transmission of the small data and the preferred-UE-state indication. For instance, the indication can be transmitted together with the small data, e.g. within the same message, or essentially at the same time, or using the same plurality of radio resources.

In line with Fig. 20, the base station in turn receives the small data and the preferred-UE-state indication and may thus determine on that basis that the UE is to be transitioned to the connected state. This determination on the base station side is based on the received indication but can typically take various other parameters into account, such as the load of the cell or the priority of the UE or the priority of the data carried by the small-data transmission. For instance, the base station may determine to keep a UE with a low-priority service in the inactive state against the UE's preference (indicated in the preferred-UE-state indication), when data traffic is already high, rather than instructing the UE to transition to the connected state. On the other hand, UEs with high-priority services could be prioritized by following the UE's preference and instructing same to transition to the connected state.

According to exemplary implementations, the base station can take into account the priority of the data or the UE when determining whether to transition a UE to connected state. For instance, when multiple UEs send their respective preference (preferred-UE-state indication), the base station determines to not move a UE with a low-priority service to the connected state when the traffic is high, whereas other UEs with high-priority service can be prioritized by transitioning them to the connected state.

In line with Fig. 20, it is assumed that the base station instructs the UE by sending an UE-state instruction that instructs the UE to change into the connected state.

The UE, when receiving a corresponding UE-state instruction, follows the instruction and thus changes its state to be in accordance with what the UE-state instruction from the base station indicates, in this case the UE changes to the connected state.

The small-data transmissions can then be continued by the UE in the connected state, e.g. using radio resources allocated by the base station to the UE (not shown in figures).

As described above, the UE makes the determination on when it would prefer to be in connected state for the small-data transmission, and the base station can decide whether it follows the UE's preference or not. According to a different improved small-data-transmission procedure in line with Fig. 18, it is the base station that makes the determination on when the UE is to be transitioned to the connected state, based on a characteristic relating to the received small data. In brief, the determination made by the UE as described above is instead made by the base station, which is also aware of the small-data characteristic. In said case, the determination is not made by the UE, nor does the UE have to transmit the preferred-UE-state indication. This different procedure will be explained in the following and in connection with **Fig. 21****,** which is a signaling diagram illustrating several small-data uplink transmissions by the UE.

For instance, it is assumed that the UE performs the small-data transmission to the base station in a usual manner. From base station perspective, the small data is received. The base station then determines whether to transition the UE from the inactive state to the connected state based on a characteristic relating to the received small data. More detailed solutions on how the base station determines whether the UE should transition to the connected state or stay in the inactive state will be presented below (see first, second and third solutions).

Eventually, it is assumed that the base station determines to transition the UE to the connected state, taking the received small-data transmission(s) into account. Correspondingly, the base station transmits a UE-state instruction, indicating the connected state, to the UE. The UE in turn reacts to the instruction by changing its state to the connected state. The UE may then proceed with the small-data transmission(s) in the connected state, e.g. using radio resources allocated by the base station to the UE (not shown in figures).

In the following, two different solutions will be presented on how the step of determining whether to transition the UE to the connected state can be performed by the UE or the base station. As mentioned above, said determination on whether to transition the UE to the connected state is performed based on a characteristic relating to the small data. According to a first solution, this small-data-related characteristic is the number of times per time period that the UE performs a small-data transmission, or put differently is the frequency (quantity / time period) of the small-data transmissions. According to another second solution, this small-data-related characteristic is a characteristic of the data itself (carried by the small-data transmission), rather than relating to the transmission frequency of several small-data transmissions. A third solution will then be presented which combines the above first and second solutions so as to form a new solution which combines benefits from both the first and the second solutions.

### First solution - transmission frequency of the small-data transmissions

A first solution (and variants and implementations thereof) is presented in the following on how the UE determines when it would like to be transitioned to the connected state based on the characteristic that relates to the small data. The determination according to the first solution is based on the number of times per time period that the UE performs a small-data transmission, or put differently based on the frequency (i.e. quantity / time period) of the small-data transmissions.

As discussed before, the disadvantages of an increased power consumption and signaling overhead is especially detrimental in case of frequent small-data transmissions. Consequently, by taking the small-data transmission frequency into account for transitioning the UE from the inactive state to the connected state, it is possible to perform only comparatively infrequent small-data transmissions in the inactive state , while allowing the UE to transition to the connected state in case of frequent small-data transmissions.

According to this first solution, the UE monitors the number of times it performs a small-data transmission during a specific period of time, and compares same to a threshold. If the transmission frequency reaches the threshold, the UE may decide that it is more efficient to proceed with the small-data transmission in the connected state and correspondingly transmits a preferred-UE-state indication, indicating the connected state as the preferred state of the UE, to the base station.

For instance, a transmission frequency can be 10 small-data transmission per second. Correspondingly, an exemplary transmission count threshold could be 10 small-data transmissions, while the corresponding transmission period is then 1000 ms.

Further, the transmission frequency can vary, e.g. depending on the load of the network. For instance, for a heavily-congested network, the gNB could allow for small-data transmissions in the inactive state that occur more frequently than for a lightly-congested network.

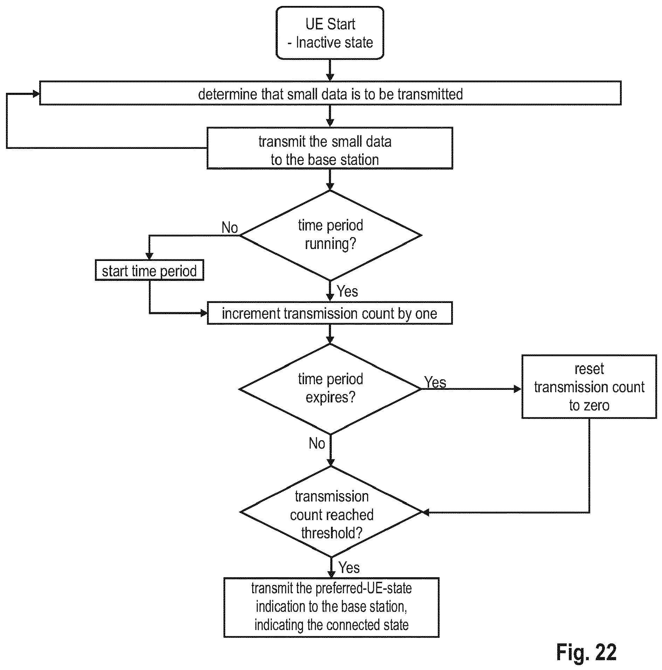

One exemplary implementation of this first solution is illustrated in the flow diagram of **Fig. 22****,** which shows the UE behaviour according to this improved small-data transmission procedure. As illustrated, the UE performs the small-data transmission to the base station. For instance, the UE determines that small data is to be transmitted and correspondingly transmits same to the base station.

Additionally, the UE includes steps to monitor the small-data transmissions, particularly monitoring the time period and a transmission count in connection with the small-data transmissions. In order to be able to monitor the frequency of the small-data transmissions, it is exemplarily assumed that the time period to be monitored starts when the UE starts with the transmission of the small data, i.e. starts with the first small-data transmission of the UE. Furthermore, the UE simply counts the number of small-data transmission, starting with the first small-data transmission and increasing the count with each small-data transmission accordingly. Moreover, the count of the small-data transmissions is restarted (e.g. set to zero) each time the corresponding time period (monitored in parallel) expires, so as to determine and monitor the frequency of the small-data transmissions i.e. the quantity during a period of time.

According to the exemplary implementation of Fig. 22, the UE first determines whether the time period is already running (has been started already). If not, the UE assumes that the small-data transmission is the first small-data transmission for this new period of time and correspondingly starts the time period. In any case, the transmission count is incremented by one for each small-data transmission.

The UE process flow also includes determining whether and when the time period expires, and if so, at that time the UE resets the transmission count to zero. Although Fig. 22 illustrates this time period expiry check (and the subsequent count reset) in the particular position of the sequence of UE behavior, it is rather possible to consider these steps as being performed in parallel to the other procedural steps. Importantly, the UE, at the time the time period expires, resets the transmission counter to zero, while the incrementation of the counter proceeds in parallel (be it from the reset 0, or the current count).

In any case, (e.g. also if the time period has not yet expired) the UE may proceed to compare the current transmission count against a suitable threshold. If the threshold has been reached by the current transmission count, the UE determines to transmit a preferred-UE-state indication to the base station, indicating that the connected state would be preferred. For instance, the transmission-count threshold can be defined such that the transmission count must be greater than this transmission-count threshold so as to trigger the UE to transmit the preferred-UE-state indication to the base station. On the other hand, the transmission-count threshold can be defined such that the transmission count is equal to this transmission-count threshold so as to trigger the UE to transmit the preferred-UE-state indication to the base station.

As presented before, and although it is not explicitly apparent from the flow diagram in Fig. 22, the transmission of the preferred-UE-state indication can e.g. be performed together with the transmission of the small data. Correspondingly, the transmission of the small data, illustrated as the second step of the flow diagram of Fig. 22, can be considered e.g. as the instruction to prepare and perform the small-data transmission, such that the last step of the flow diagram of Fig. 22 can be performed together with the small-data transmission.

On the other hand, the preferred-UE-state indication could also be transmitted separately from the small-data transmission, or can be transmitted together with the next small-data transmission.

Although not explicitly illustrated in Fig. 22, in case the UE determines that the transmission-count threshold has not been reached, the UE does not perform the transmission of the preferred-UE-state indication. Alternatively, the UE could rather perform a transmission of the preferred-UE-state indication, however, indicating the inactive state as the preferred UE-state of the UE.

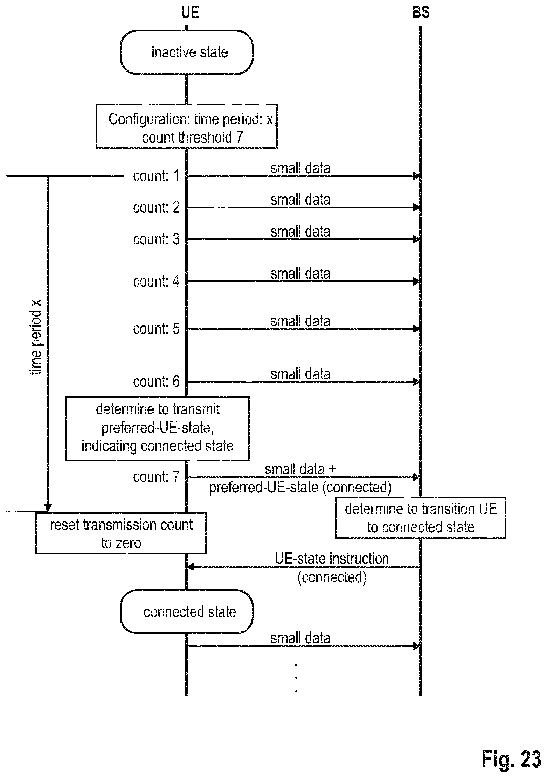

**Fig. 23** illustrates an exemplary signaling diagram for the small-data transmission according to the above discussed first solution. It is assumed that the UE is configured with a time period of length x and a transmission-count threshold of seven (i.e. seven small-data transmissions). It is further assumed that the UE determines to transmit the preferred-UE-state indication when reaching the transmission-count threshold (e.g. transmission count = transmission-count threshold). The time period as well as the transmission count starts with the first small-data transmission, as illustrated with "count: 1" in Fig. 23. The expiry of the transmission time period, started with the first small-data transmission, is illustrated in Fig. 23, too.

With each small-data transmission, the UE increases the transmission count by one, while the time period keeps running.

It is exemplarily assumed that the transmission-count threshold of seven is reached before the time period expires. In connection with the seventh small-data transmission, the UE determines to transmit the preferred-UE-state indication, indicating the connected state. Correspondingly, the small-data transmission is performed together with the transmission of the preferred-UE-state indication. Although Fig. 23 illustrates the box "determine to transmit preferred-UE-state, indicating connected state" between the sixth and seventh small-data transmission, it should be noted that the step of determining to transmit the preferred-UE-state indication occurs in close connection with the seventh small-data transmission as explained above, e.g. during the preparation time for the small-data transmission.

The base station receives the preferred-UE-state indication and determines to follow the UE preference. The base station correspondingly provides a UE-state instruction to the UE, instructing the UE to transition to the connected state. The UE, in line with the instruction, changes to the connected state and then proceeds with the small-data transmission(s).

Fig. 23 also illustrates how the UE resets the transmission count to zero upon expiry of the time period, which in this example occurs before the UE receives the UE-state instruction from the base station.

It should be noted that the monitoring of the time period and the monitoring of transmission count need only be performed by the UE while in the inactive state. Correspondingly, the UE proceeds with the small-data transmissions in the connected state without counting the small-data transmissions or monitoring a time period.

According to a further example, the transmission count (as well as the time period) can also be reset to zero when the UE transitions to the connected state, such that the UE can restart the improved small-data transmission procedure when returning to the inactive state in the future.

In one exemplary implementation, a small-data transmission counter can be operated by the UE to count the small-data transmission, and a small-data transmission timer can be operated by the UE to monitor the time period.

According to one specific variant, the UE can determine to not transmit the preferred-UE-state indication, despite reaching that transmission-count threshold, namely in case the UE determines that there will be no further small-data uplink transmissions. For instance, the small-data transmission causing the transmission count to reach the transmission-count threshold can be the last small-data transmission for a substantial period of time, such that the UE can exceptionally refrain from transmitting the preferred-UE-state indication to the base station. Instead, the UE may not transmit any UE state indication to the base station, or may indicate to the base station that the inactive state is the preferred UE state of the UE.

One benefit of the first solution is that the UE's determination on when to request the change into the connected state is based on a defined behavior that takes the actual transmissions of the small data into account (e.g. monitoring the time period and transmission count). The discussed solution provides a unified procedure that can be applied uniformly by all UEs. Therefore, the base station, when receiving such a request (in the form of the preferred-UE-state indication), can trust this request.

On the other hand, especially when compared to the second solution, the indication of the UE to the base station is typically not indicated quickly, because the UE has to actually await that the transmission count reaches the corresponding transmission-count threshold before sending the preferred-UE-state indication, requesting to be transitioned to the connected state.

In the above implementations, it was explained that every small-data transmission is counted. According to different variants thereof, the first solution more specifically may differentiate between successful and unsuccessful small-data transmissions. Depending on how the small-data transmission is actually implemented, the UE may learn whether the small-data transmission was successful or unsuccessful. For instance, when implementing the small-data transmission based on the random access procedure, the UE may be able to learn from the contention resolution of the RACH (see step four of 4-step RACH, or step 2 of 2-step RACH), whether the small-data transmission was successful or not.

According to one variant of this first solution, every small-data transmission counts, irrespective of whether it turns out to have been a successful or unsuccessful small-data transmission. Consequently, also a non-successful transmission of the small data would be counted for the first solution. The variant could be beneficial for higher priority services (for which latency is critical) because the counter is increased more quickly and does reach the transmission-count threshold earlier, thereby potentially triggering the transition to the connected state earlier.

According to a further variant of this first solution, the unsuccessful small-data transmission attempt does not count and thus does not increase the transmission count of the small-data transmission. Correspondingly, when the UE learns that the small-data transmission attempt failed, the transmission count is not increased, or, in case the count was already increased when performing the small-data transmission attempt, is decreased again by one. The variant could be beneficial for lower priority services, because the counter will not reach the threshold quickly, and thus the potential transition to the connected state is performed at a later time.

In the above implementations of this first solution, the UE monitors the small-data transmission frequency by suitably monitoring the number of small-data transmissions during a specific time period. The particular values of the time period and of the transmission-count threshold to be applied by the UE can e.g. be configured by the base station.

For the following variants of this first solution, it is exemplarily assumed that the UE supports a plurality of different services that may involve small-data transmissions. For instance, such services could be eMBB, URLLC and mMTC. Within each of such service, small-data transmissions can occur.

According to one implementation, the improved small-data transmission procedure according to any of the above discussed implementations of the first solution can be applied commonly for the small-data transmissions of the different services. In this case, the transmission count, the time period and the transmission-count threshold are commonly operated for all the services. For instance the small-data transmission count is increased by small-data transmissions for any of the services, and the same common time period is started and monitored for any of the services.

Moreover, the UE can be configured appropriately by the base station, particularly with information on the values of the length of the time period and the threshold of the transmission count. Since the first solution is commonly applied across all services, only one commonly used time period value and one commonly used transmission-count threshold value need be configured for the UE.

Alternatively, the improved small-data transmission procedure can be applied separately for the small-data transmissions of the respectively different services. In this case, the transmission count, the time period and the transmission-count threshold are separately monitored by the UE for each service. For instance, the small-data transmission for a first service 1 only counts for the service-specific count, but not for the service-specific count made for small-data transmissions for another second service 2. Similarly, the time periods are separately started and monitored for each of the services. Correspondingly, the UE may request the transition to the connected state when reaching the service specific transmission-count threshold.

Moreover, the UE can be configured appropriately by the base station, particularly with information on the possibly-different values of the length of the time period and the threshold of the transmission count. Consequently, requesting transition from the inactive state to the connected state is service specific. Different alternatives on the configuration are possible. According to the first alternative, the same common time period and the same common transmission-count threshold can be used for all services, even though the first solution is then separately applied for each service and its small-data transmission. This has the benefit that the configuration for this first solution of the improved small-data transmission is facilitated, because it suffices to change simply one common time period and one common transmission-count threshold. For instance, such a configuration could be done by using system information, as will be explained in more detail below.

According to a second alternative, the time period as well as the transmission-count threshold is not commonly configured but configured specifically for each service (thus, could be called service-specific time period and service-specific transmission-count threshold). This has the benefit that the parameters for each service can be defined separately and in accordance with the characteristic (e.g. priority) of the service (even though effectively some of the services may use the same value of the time period and/or transmission-count threshold). In that case, it might become necessary to configure the UEs separately, by using dedicated messages, as will be explained in more detail below

According to a third alternative, the same common time period can be used for all services, but however service-specific transmission-count thresholds can be configured for each different service.

According to a fourth alternative, the same common transmission-count threshold can be used for all services, but however service-specific time periods can be configured for each different service.

According to the third and fourth alternatives, the configuration is facilitated, because only one of the required parameters need to be separately configured for each service, while the other can be commonly configured for all services. Nonetheless, even though only one parameter is specifically defined for each service, the third and fourth alternatives still allow to define the overall small-data transmission frequency depending on the characteristic of the service (such as the priorities).

As already hinted at above, the configuration of the time period and transmission-count threshold can be performed by the base station. Different implementations are possible in said respect, also depending on which of the above four alternatives is used for configuration relating to the different services.

In case one (common) parameter is used (e.g. across different services), the system information broadcast can be used by the base station to appropriately configure the UEs in its cell. This allows for an efficient and simple configuration of many UEs.

Alternatively, the base station may also individually configure each UE, by use of dedicated messages, i.e. one or more appropriate configuration messages are transmitted by the base station to each UE individually. Although this is not as efficient as the system information broadcast implementation above, it allows the base station to provide individual parameters for the time period and/or the transmission-count threshold for each UE. Thus, this is particularly useful for the solution where service-specific parameters are used for the improved small-data transmission (see above second, third and fourth alternatives).

The following exemplary implementations reuse the configuration of the RACH procedure to also carry the configuration information on the time period and transmission-count threshold. For instance, the configuration information element *RACH-ConfigGenericTwoStepRA* for the 2-step RACH (see 3GPP TS 38.331 v16.0.0 section 6.3.2) can be extended by the parameters *dataTX-Timer* and *dataTx-CounterThreshold* as follows (see last two lines).

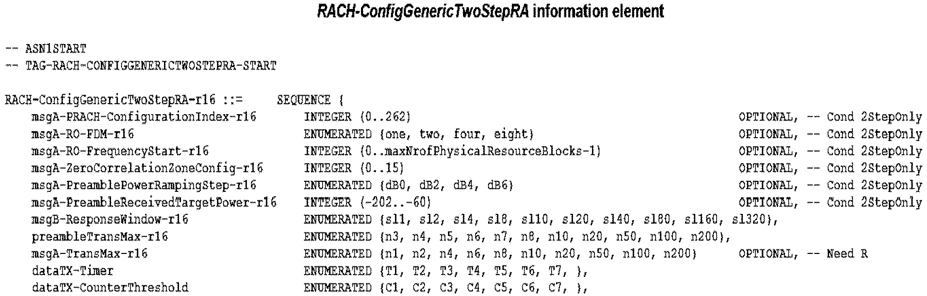

In a different exemplary implementation, the configuration information element *RACH-ConfigGeneric* for the 4-step RACH (see 3GPP TS 38.331 v16.0.0 section 6.3.2) can be extended by the parameters *dataTX-Timer* and *dataTx-CounterThreshold* as follows (see last two lines).

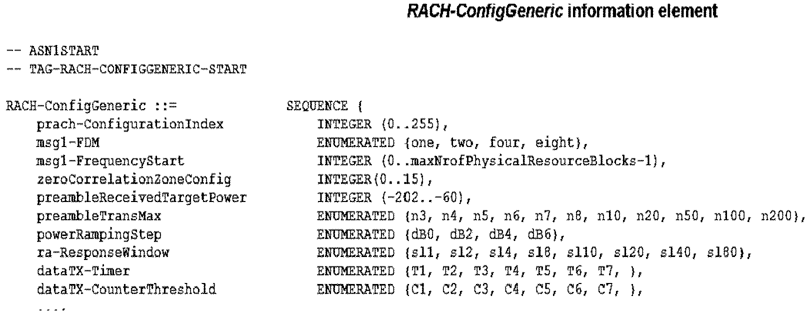

The two information elements relate to the RACH procedure, which is one of the options that might be used in the future to support small-data transmissions by UE in the inactive state. Correspondingly, such a configuration of the parameters together with the underlying transmission mechanism to transmit the small data is effective.

These information elements could be e.g. sent by the base station via the system information broadcast to all UEs.

In addition or alternatively, the improved-small-data transmission procedure also allows to individually configure each UE, e.g. by using the RRC protocol. According to one example, the information element *LogicalChannelConfig* (see 3GPP TS 38.331 v16.0.0 section 6.3.2) can be re-used and extended by the parameters *dataTX-Timer* and *dataTx-CounterThreshold* as follows(see last two lines).

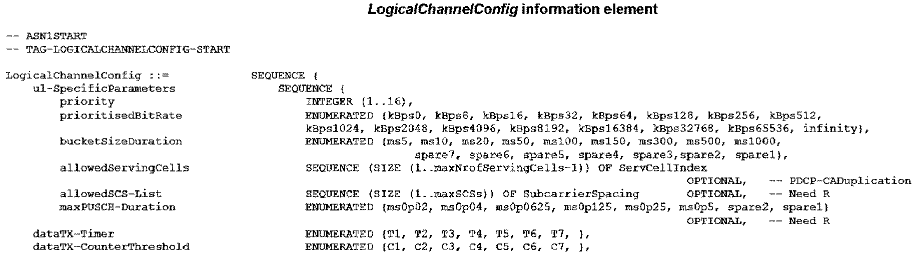

In the above implementations, two parameters, called *dataTX-Timer* and *dataTX-CounterThreshold,* are added to the information elements, allowing to base station to provide a configuration among different available values T1-T7 for the time period and C1-C7 for the transmission-count threshold.

Although not shown in the above information elements, the parameters *dataTX-Timer* and *dataTX-CounterThreshold* could also be considered optional in the respective information element, such that they do not have to be always necessarily present in the respective information element.

The above first solution (and its variants and implementations) has been described as being performed by the UE. However, as already explained before, other implementations of the improved small-data transmission procedure provide an improved base station that performs the determination of whether or not to transition the UE to the connected state based on a characteristic relating to the small data (see e.g. Fig. 18, Fig. 21 and related description). Accordingly, the principles described above for implementing the first solution in the UE can be correspondingly implemented at the base station as well.

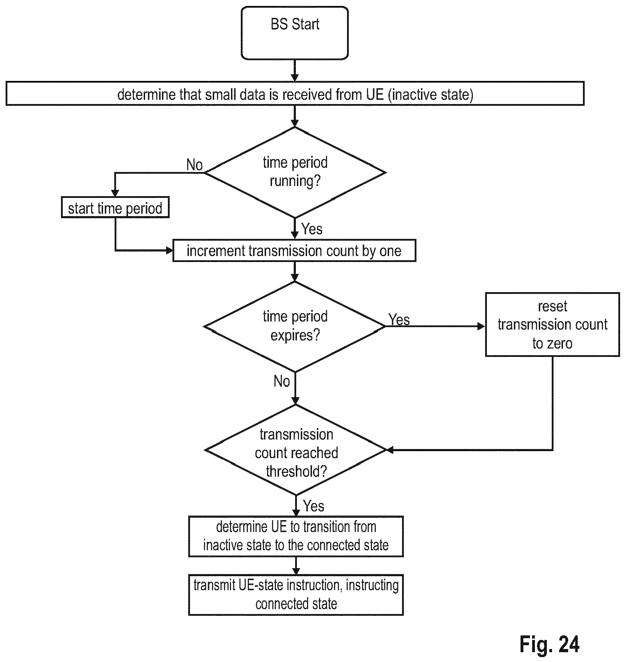

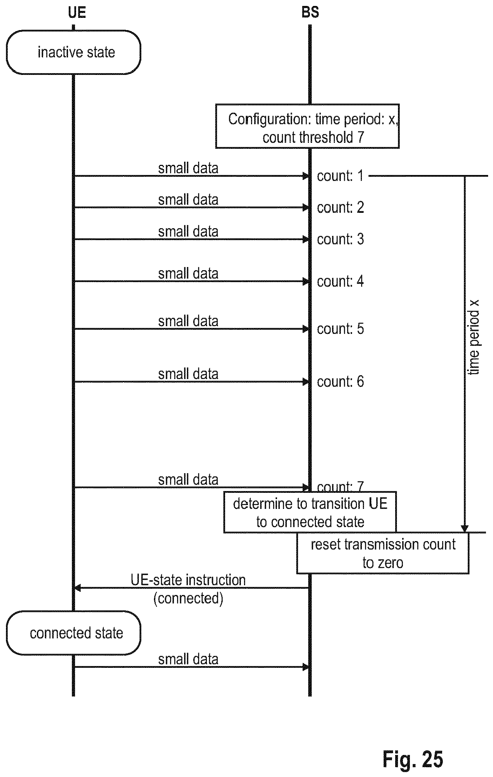

An exemplary implementation of the first solution of the improved small-data transmission procedure in the base station will be explained in the following with reference to Fig. 24 and Fig. 25. **Fig. 24** is a flow diagram for the base station behavior, while **Fig. 25** is a signaling diagram on the small-data transmissions between the UE and the base station.

As apparent from the exemplary implementation from Fig. 24, the base station behavior is quite similar to the one assumed for the UE (see Fig. 22). Correspondingly, similar or the same procedural steps can be performed by the base station as already described in detail with the UE. A difference is that the base station bases its determination on the reception of small-data transmission(s) from the UE. Furthermore, rather than determining whether to transmit a preferred-UE-state indication, the base station directly determines whether or not to transition the UE into the connected state.

Without repeating every detail already provided in connection with the UE, in the following a general overview of the base station behavior will be provided.

The base station determines whether a small-data transmission is received. This can be done in different ways. For instance, the base station can differentiate a small-data transmission from another uplink data transmission based on the received transmission. For instance, when the small-data transmission is not accompanied by a buffer status report indicating the remaining buffer level (see e.g. RACH-based solutions), the base station can determine that no further data is to be transmitted by the UE and that only small-data was transmitted. Otherwise, the UE might have requested a change to the connected state (e.g. by sending a resume request message).

Furthermore, exemplary assuming that the small-data is defined as being below a threshold (e.g. defined by base station or by a standard), the base station can also determine from the transmission and optionally also from the buffer status report (when sent by UE) whether the data carried by the received transmission complies with that small-data definition (e.g. is below the small-data-defining threshold).

According to a different variant (explained herein as well), the UE might select a preamble from a group of preambles that is associated with small-data transmissions only. Thus, in such a RACH-based solution, the base station can identify the small-data transmission based on whether or not the UE used a small-data-related preamble.

Then, the base station proceeds to determine whether the UE should be transitioned to the connected state in relation to these small-data transmissions, by using a time period and a transmission count, as already explained in connection with the corresponding UE implementation.

In particular, the base station includes steps to monitor the reception of the small-data transmissions, particularly monitoring the time period and a reception count in connection with the small data. In order to be able to monitor the frequency of the small-data receptions, it is exemplarily assumed that the time period to be monitored starts when the base station starts receiving a small-data transmission, i.e. starts with the first small-data reception. Furthermore, the base station simply counts the number of times small data is received, starting with the first small-data transmission and increasing the count with each small-data reception accordingly. Moreover, it is assumed that the count of the small-data receptions is restarted (e.g. set to zero) each time the corresponding time period, monitored in parallel, expires. In such a way, it is possible to monitor the frequency of the small data receptions i.e. the quantity during a period of time.

According to the exemplary implementation of **Fig. 24****,** the base station first determines whether the time period is already running (has been started already). If not, the base station assumes that the small-data transmission is the first small-data transmission received for this new period of time and correspondingly starts the time period. In any case, the transmission count is incremented by one for each small-data transmission.

The BS process flow also includes determining whether and when the time period expire, and if so, at that time the UE resets the transmission count to zero.

In any case (also if the time period has not yet expired) the base station may proceed to compare the current transmission count against a suitable threshold. If the threshold has been reached by the current transmission count, the base station determines to transition the UE to the connected state. A corresponding UE-state instruction can be transmitted to the UE, indicating to the UE to transition to the connected state.

**Fig. 25** illustrates, in a similar manner as Fig. 23, a particular set of exemplary small-data transmissions. Similar assumptions are made as for Fig. 23, e.g. assuming a configuration with a time period of length x and a transmission-count threshold of seven small-data transmissions. The time period as well as the transmission count starts with the reception of the first small-data transmission, as illustrated with "count: 1" in Fig. 25. The expiry of the time period, started with the reception of the first small-data transmission, is illustrated in Fig. 25, too.

With each small-data reception, the base station increases the transmission count by one, while the time period keeps running. It is exemplarily assumed that the transmission-count threshold of seven is reached before the time period expires. In connection with the seventh small-data transmission, the base station determines to transition the UE to the connected state. The base station correspondingly provides a UE-state instruction to the UE, instructing the UE to transition to the connected state.

### Second solution - characteristic of the data itself

A second solution (and variants and implementations thereof) is presented in the following on how the UE determines when it would like to be transitioned to the connected state based on the characteristic relating to the small data. The determination according to the second solution is based on a characteristic of the data itself (carried by the small-data transmission), rather than based on the transmission frequency of several small-data transmissions as for the first solution.

For instance, the data characteristic can be one or more of e.g. a particular priority of the data, or a particular type of the data, or a particular incoming time interval of the data.

The UE determines its preferred UE state, based on the data characteristic relating to the small-data transmissions. Correspondingly, the UE then determines whether or not to transmit a corresponding preferred-UE-state indication to the base station so as to request a transition to another state.

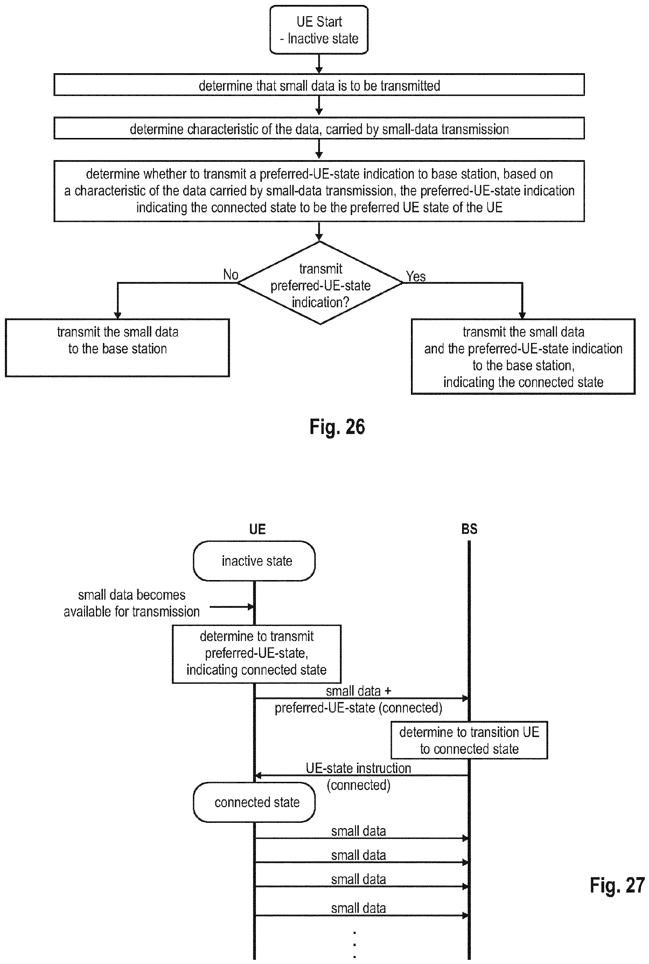

An exemplary implementation of this second solution is illustrated in Fig. 26 and Fig. 27. **Fig. 26** is a flow diagram for the UE behavior according to this second solution, and **Fig. 27** is a signaling diagram for the small-data transmissions according to this second solution. As apparent from **Fig. 26****,** the UE performs the step of determining a characteristic of the UE that will be carried by the small-data transmission, which is then used for the step of determining whether or not to transmit a preferred-UE-state indication to the base station. The UE then transmits both the small data and the preferred-UE-state indication, when determining to transmit the preferred-UE-state indication, or the UE only transmits the small data to the base station, when determining to not transmit the preferred-UE-state indication.

According to the exemplary procedure of **Fig. 27****,** the UE can take the determination e.g. right at the beginning of the small-data transmissions, e.g. after the small data becomes available for transmission for the first time. At this point of time, the UE can be already aware of the characteristic of the data that will be carried by the small-data transmission and can make the determination on that basis. As exemplarily assumed in Fig. 27, the UE will determine that the characteristic of the data is such that the UE prefers to be in the connected state, and thus the UE transmits the preferred-UE-state indication (indicating the connected state as the preferred state) to the base station together with the small data.

Likewise, it is exemplarily assumed that the base station follows the UE's preference and determines to transition the UE in to the connected state, by providing a corresponding UE-state instruction to the UE. The UE in turn follow the instructions from the base station, changes into the connected state, and is able to proceed with small-data transmissions in the connected state.

As explained above, the characteristic of the data could be a priority of the data. In general, the UE might determine to transition into the connected state when the data is associated with a high priority. On the other hand, the UE might determine to stay in the inactive state when the data is associated with a low priority. A corresponding priority threshold can be defined so as to distinguish between these two options.

In particular, an exemplary implementation distinguishes between high-priority data traffic and low-priority data traffic. The priority could be related to one or more particular traffic characteristics, such as the latency requirements. For instance, high-priority data traffic could be data for e.g. URLLC, where an early change to the connected state is beneficial to fulfil the low-latency requirements of such data. Correspondingly, in case the priority of the data is high (e.g. above a threshold), the UE can determine that proceeding with the small-data transmissions in the connected state is more beneficial, and might thus transmit a corresponding preferred-UE-state indication to the base station, requesting a change to the connected state.

Conversely, low-priority data traffic could be data for e.g. eMBB or mMTC, where the relaxed latency requirements allow the UE to stay in the inactive state. In that case, the UE can determine to proceed with the small-data transmissions in the inactive state

As explained above, the characteristic of the data could be a type of the data. For instance, the types of the data could be distinguished by the (higher-layer) applications that generated the data. For instance, data generated by an online game can be distinguished from data generated by a telephone call, because the former typically causes very frequent data transmissions with a high requirement on the latency, while the latter is characterized by rather infrequent data transmissions but also with a strict latency requirements. On the other hand, data generated by a webpage application may typically be very infrequent and not have strict latency requirements. Therefore, the type of data allows to derive some characteristic of the data to be transmitted by the small-data transmission and may thus allow the UE to determine whether staying in the inactive state or transitioning to the connected state is more beneficial for that type of data.

As explained above, the characteristic of the data could be a typical incoming time interval that can be expected for the data. For instance, the typical incoming time interval can be different for different data, e.g. based on the origin of the data or based on the higher-layer application that generates the data (similar to the above type of data), and thus directly influences how frequently a small-data transmission would have to be performed by the UE. For instance, assuming the data originates from a sensor, the typical incoming time interval can depend on the type of sensor. The UE may know the typical incoming time interval for the connected sensor.

In particular, a short incoming time interval would likely lead to frequent small-data transmissions, where it is beneficial that the UE is in the connected state. On the other hand, long incoming time intervals will likely lead to comparatively infrequent small-data transmissions, where the UE might be kept in the inactive state. The UE thus correspondingly determines not to transmit the preferred-UE-state indication to the base station.

According to one variant, the UE is informed about the characteristic of the incoming data from higher layers in the UE. For instance, the application generating the data (to be carried by the small-data transmission) informs a lower layer responsible for performing the above-described improved small-data-transmission procedure. For instance, the higher layer is typically aware of the higher-layer applications that generate the data to be transmitted (e.g. online game, phone call, web browsing, etc.). Alternatively, the data radio bearers carrying the data can also be used to indicate particular characteristic of the data to be transmitted.

Moreover, the UE will have information how to determine that being in the connected state is more beneficial for which characteristic of data (e.g. priority or type of data), as exemplified above. Such configuration information can be e.g. provided by the base station to the UE, or might be fixed in a 3GPP standard.

One benefit of the second solution is that the UE's preference for the connected state can be determine quickly by the UE, and without the need to actually monitor the small-data transmissions for a particular period of time. Correspondingly, the preference to be transitioned to the connected state can be indicated quickly by the UE to the base station.

On the other hand, for the same reason, the base station may not trust the UE's evaluation of preference and might decide to not transition the UE to the connected state.

The above second solution (and its variants and implementations) has been described as being performed by the UE. However, as already explained before, other implementations of the improved small-data transmission procedure provide an improved base station which performs the determination of whether or not to transition the UE to the connected state based on a characteristic relating to the small data (see e.g. Fig. 21 and related description). Accordingly, the principles described above for implementing the second solution in the UE, can be correspondingly implemented at the base station as well.

Correspondingly, the base station, when receiving a small-data transmission, determines the characteristic of the data carried by the received small-data transmission. Based on this determined characteristic of the data, the base station may then proceed to determine whether or not to transition the UE to the connected state. As explained in detail in connection with the UE implementation, the data characteristic can be one or more of e.g. a particular priority of the data, or a particular type of the data, or a particular incoming time interval of the data. In order to avoid repetition, reference is made to the above explanation made in connection with UE implementation on how the determination is possible depending on the different characteristics of the data.

In such a base station centric solution, the UE does not have to perform the determination and does not have to transmit the preferred-UE-state indication.

### Third solution - first solution and second solution

The above first and second solutions have been described separately from one another in order to facilitate the understanding of the underlying mechanisms and benefits of the respective solution. However, according to the third solution presented herein, the UE can support a combination of the first and the second solutions so as to form a new UE (and base station) behavior that allows facilitating both benefits of the above first and second solutions.

This description of this third solution will heavily rely on the explanations already given in connection with the first and second solution, and repetitions are avoided where possible. Rather, a possible implementation of this third solution will be generally described in the following without however again providing details of their respective steps relating to the first and second solutions that have already been described in detail above. For the details of their respective steps (and variants thereof) relating to the first and second solutions, reference is made to the above explanation.

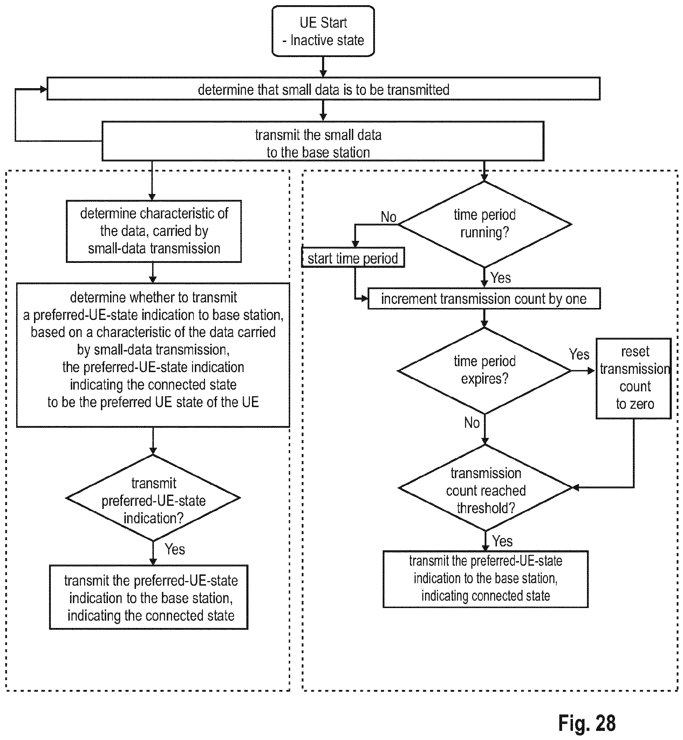

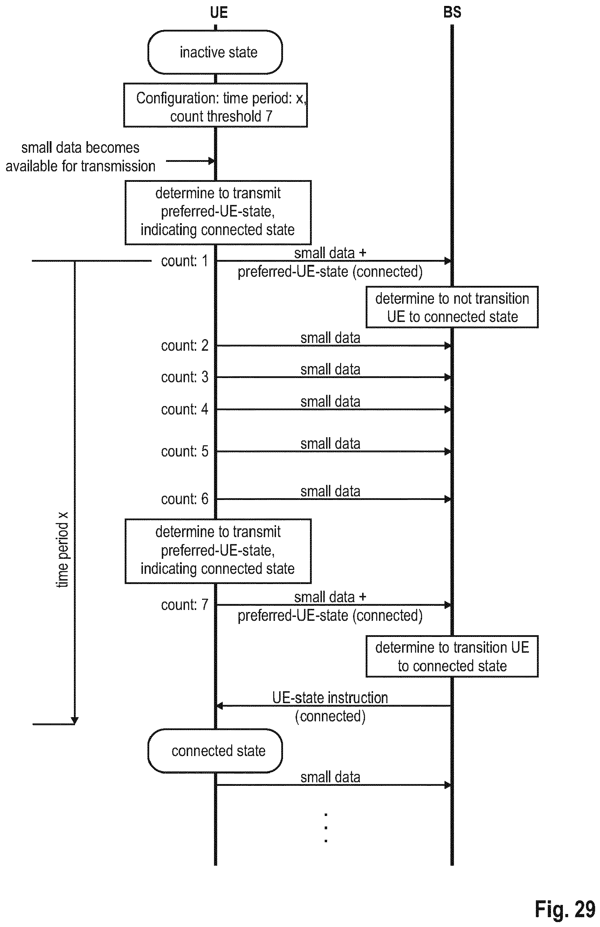

One possible exemplary implementation of the third solution will be described in connection with Fig. 28 and Fig. 29. **Fig. 28** is an exemplary flow diagram for the UE behavior. **Fig. 29** is a signaling diagram on how to transmit small data between a UE and a base station.

As apparent from **Fig. 28****,** the UE behavior according to the third solution encompasses a parallel operation of the first and second solutions, similar to what was described above in connection with the UE behavior of Fig. 22 (first solution) and Fig. 26 (second solution).

Correspondingly, the UE can transmit the preferred-UE-state indication based on any of the two branches illustrated in Fig. 28. As explained in connection with the respective first and second solutions above, the second solution (left branch of Fig. 28) allows for a quick and early request for a UE state change to the connected state but might be less trust-worthy from the perspective of the base station. On the other hand, the first solution (right branch of Fig. 28) is more trustworthy from the perspective of the base station, however may take much longer for the UE to transmit its preference for the connected state to the base station.

The third solution provides a combination of the benefits, because the UEs preference can be provided to the base station both early and, at a later point in time, in a trust-worthy manner.

Combination of those benefits can be better understood from **Fig. 29****.** It is exemplarily assumed that the UE determines to transmit the preferred UE state, indicating the connected state, already very early in connection with the first small-data transmission according to the above described second solution. Correspondingly, the preferred-UE-state indication can be transmitted together with the first small-data transmission (see "count: 1" in Fig. 29).

It is however exemplarily assumed that the base station does not follow the UE's preference and decides to not transition the UE to the connected state. For instance, the network load can be quite high such that the base station prefers to not follow immediately the UE's preference solely relying on this early and not trustworthy indication.

On the other hand, although not assumed for the exemplary scenario of Fig. 29, the base station could have decided to already transition the UE into the connected state, for instance when the network load is low. Put more generally, depending on the network load of the base station, the type (according to first solution or second solution) of the preferred-UE-state indication may be taken into account by the base station for the determination as to whether or not to transition the UE to the connected state.

Correspondingly, in line with Fig. 29, the UE does not receive the UE-state instruction to transition to the connected state and thus proceeds with small-data transmissions in the inactive state.

In parallel however, the first solution is applied during this improved small-data transmission procedure such that the first small-data transmission caused the beginning of the time period as well as the start of the transmission count. With every small-data transmission performed subsequently by the UE, the count is increased by one and the time period is continually monitored.

In the same manner as explained for the second solution above, see e.g. Fig. 23, it is assumed that the small-data transmissions reach the transmission-count threshold of seven small-data transmissions within the time period, such that the UE determines to transmit a preferred-UE-state indication, indicating the connected state as the preferred state, to the base station. In this case the base station follows the UE's preference, determines to transition the UE to the connected state and transmits the corresponding UE-state instruction to the UE.

The above third solution (and its variants and implementations) has been described as being performed by the UE. However, as already explained before, other implementations of the improved small-data transmission procedure provide an improved base station that performs the determination of whether or not to transition the UE to the connected state based on a characteristic relating to the small data (see e.g. Fig. 18, Fig. 21 and related description). Accordingly, the principles described above for implementing the third solution in the UE can be correspondingly implemented at the base station as well.

### Further Variants

Numerous solution, variants and implementations of the improved small-data transmission procedure have been described above. For instance, three different solutions (and respective variants thereof) have been described as to how the UE (or the base station) can determine when to transition to the connected state based on the characteristic relating to the small data.

The above described solutions and implementations of the improved small-data-transmission procedure include the transmission of the small data and the preferred-UE-state indication, sometimes without providing details on how exactly the small data and the preferred-UE-state indication can be transmitted. As was already mentioned before, using the RACH procedure can be one of many possible implementations in said respect.

Correspondingly, one exemplary variant is based on a 4-step RACH procedure, where the small data and the preferred-UE-state indication can be transmitted with the third message Msg3 from the UE to the base station. For example, the small data can be transmitted on a corresponding uplink shared channel (such as the PUSCH) and the preferred-UE-state indication can be transmitted on a signaling connection (such as the signaling radio bearer) or on the uplink shared channel too.

Another exemplary variant is based on a 2-step RACH procedure, where the small data and the preferred-UE-state indication can be transmitted with the first message MsgA from the UE to the base station. For example, the preamble of MsgA can be transmitted on the PRACH, and the small data can be transmitted on a corresponding uplink shared channel (such as the PUSCH). The preferred-UE-state indication can be transmitted on a signaling connection (such as the signaling radio bearer) or on the uplink shared channel too.

For instance, a 5G-NR-compliant variant could transmit the small data and the preferred-UE-state indication as part of the RACH procedure explained in the corresponding section "Random Access procedure" above.

In the above described solutions and implementations of the improved small-data-transmission procedure, the UE was described to be in the inactive or connected state. According to specific 5G-NR-compliant variants, the UE may be in the RRC_INACTIVE state (corresponds to the above discussed inactive state), the RRC_CONNECTED state (corresponds to the above-discussed connected state) or the RRC_IDLE state (not discussed above).

In the above described solutions and implementations of the improved small-data-transmission procedure, it was described that the UE provides the preferred-UE-state indication to the base station. According to different variants of these solutions, the preferred-UE-state indication is carried in a message of the RRC protocol, or in a MAC Control Element, or in a message for providing UE-assistance information.

According to specific exemplary 5G-NR-compliant variants, the preferred-UE-state indication can be transmitted to the base station as part of the *RRCResumeRequest* message (see e.g. 3GPP TS 38.331 v16.0.0, section 6.2.2). An example of an extended *RRCResumeRequest* message is provided in the following:

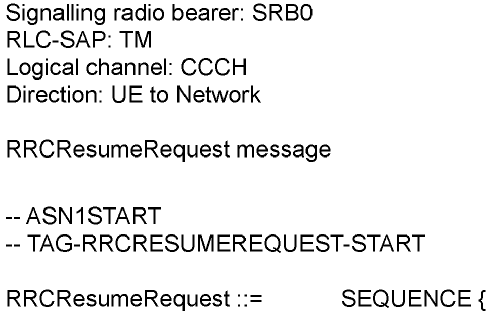

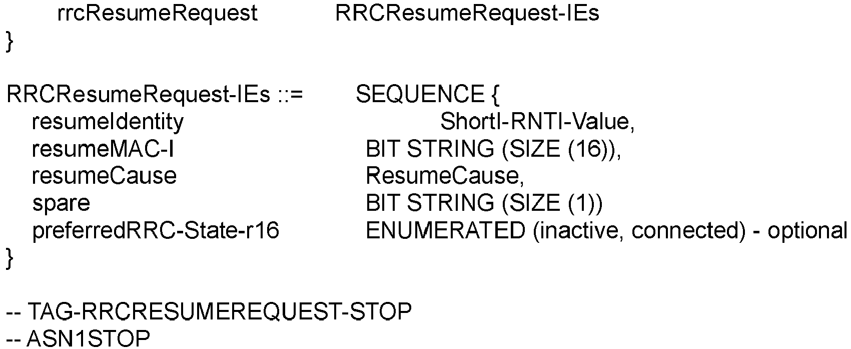

According to specific exemplary 5G-NR-compliant variants, the preferred-UE-state indication can be transmitted to the base station as the following MAC CE:

| | |
|---|---|
| LCID Number | RRC_ State (connected, inactive) |

A spare LCID (Logical Channel ID) number can be defined to identify the type of MAC CE, as a Control Element for the preferred-UE-state indication.

According to the variant that uses the UE assistance information, according to specific exemplary 5G-NR variants, the preferred-UE-state can be transmitted as part of the *UEAssistancelnformation* message, already defined by TS 38.331 v16.0.0 section 6.2.2. This *UEAssistancelnformation* message could thus be extended to also include a further information element, such as the following:

```
          Preference-r16 := SEQUENCE{
          } preferredRRC-State-r16 ENUMERATED (inactive, connected)
```

Another possibility on how the preferred-UE-state indication can be provided from the UE to the base station is based on using a preamble of the RACH procedure. Accordingly, it can be exemplarily assumed that a RACH-based solution is adopted for transmitting the small data and the preferred UE-state indication. A group of preambles could be reserved to indicate a particular preferred UE-state, such as the connected state. Correspondingly, when the UE wants to indicate that it would prefer to be transitioned to the connected state, the UE selects one preamble out of the group of preambles related to the connected state. By using this connected-state related preamble, the UE is able to implicitly indicate its connected-state preference to the base station. The base station can determine from the selected preamble that the UE is indicating that it prefers the connected state and can proceed as described above in the corresponding solutions and implementations. In one implementation, the definition of such a connected-state related group of preamble can be performed by the base station, which then provides suitable information thereon to the UE.

In the above described solutions and implementations of the improved small-data-transmission procedure, it was described that the UE provides the preferred-UE-state indication to the base station. In addition, according to further variants, the UE may transmit at least one other indication to the base station, when performing the transmission of the small data and/or the preferred-UE-state indication. This other indication could be transmitted together with the small data and the preferred-UE-state indication, e.g. as discussed above for the preferred-UE-state indication, e.g. using a message of the RRC protocol, a MAC CE, the UE assistance information message.

According to one exemplary variant, the additional indication can relate to a Discontinued Reception, DRX, procedure. In brief, the Discontinued-Reception (DRX) function is a mechanism to minimize the time the UE spends monitoring the PDCCH, so as to reduce battery consumption. The DRX function defines DRX periods (during which the UE is not required to monitor the PDCCH) and active-time periods (during which the UE is required to fulfil its requirements of monitoring the PDCCH). Defining the DRX function involves defining numerous parameters, timers, etc.; such as the On Duration, the DRX inactivity timer, the DRX short cycle, the DRX long cycle. The standardization in 5G NR has defined DRX in 3GPP TS 38.321 v16.0.0 section 5.7 titled "Discontinuous Reception (DRX)". Correspondingly, the DRX-related preference indication could indicate the UE's preference for one or more parameters of the DRX function.

For instance, the DRX-related preference indication could indicate one or more of a preferred DRX Inactivity timer, a preferred DRX Long Cycle, a preferred DRX Short cycle, and a preferred DRX Short Cycle timer. The preferences could be indicated e.g. as follows:

```
 DRX-Preference-r16 ::= SEQUENCE {
  preferredDRX-InactivityTimer-r16 ENUMERATED {
          ms0, ms1, ms2, ms3, ms4, ms5, ms6, ms8, ms10, ms20, ms30, ms40, ms50, ms60,
          ms80, ms100, ms200, ms300, ms500, ms750, ms1280, ms1920, ms2560, spare9,
          spare8, spare7, spare6, spare5, spare4, spare3, spare2, spare1} OPTIONAL,
  preferredDRX-LongCycle-r16 ENUMERATED {
          ms10, ms20, ms32, ms40, ms60, ms64, ms70, ms80, ms128, ms160, ms256, ms320,
          ms512, ms640, ms1024, ms1280, ms2048, ms2560, ms5120, ms10240, spare12,
          spare11, spare10, spare9, spare8, spare7, spare6, spare5, spare4, spare3, spare2,
          spare1 } OPTIONAL,
  preferredDRX-ShortCycle-r16 ENUMERATED {
          ms2, ms3, ms4, ms5, ms6, ms7, ms8, ms10, ms14, ms16, ms20, ms30, ms32, ms35,
          ms40, ms64, ms80, ms128, ms160, ms256, ms320, ms512, ms640, spare9,
          spare8, spare7, spare6, spare5, spare4, spare3, spare2, spare1 } OPTIONAL,
  preferredDRX-ShortCycleTimer-r16 INTEGER (1..16) OPTIONAL
```

According to another exemplary variant, the additional indication can relate to the number of MIMO (Multiple-In-Multiple-Out) layers that the UE prefers. For instance, if there is only little amount of small-data, the UE might prefer not to increase the MIMO layers (or rather decrease them), so as to save power.

The preferences could be indicated e.g. as follows:

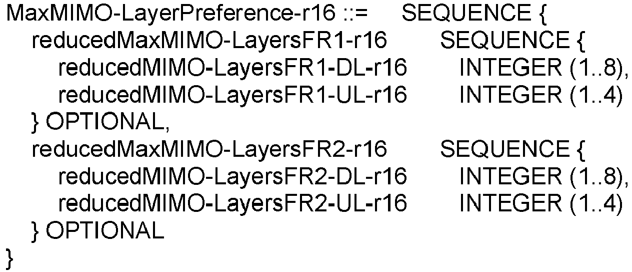

According to the solution and implementations of the improved small-data-transmission procedure described above, the small data and the preferred-UE-state indication are transmitted both to the base station. It is however likely or at least possible that the UE in the inactive state has not a lot of resources for transmitting both the small data and the preferred-UE-state indication.

For instance, when exemplarily assuming that a RACH-based small-data transmission is supported by the inactive UEs, the UE can transmit the small data and the preferred-UE-state indication based on the Msg3 (4-step RACH) or MsgA (2-step RACH), with however other information, such as the control message e.g. *RRCResumeRequest* message or a buffer status report indicating the actual amount of data in the UE buffer (e.g. the buffer status report might only be included if the small-data transmission does not carry all the small data that is available for transmission). The uplink grant size that is available for the UE to transmit all this information can be quite limited and in fact may not be sufficient to transmit everything with the Msg3 / MsgA. According to further improved variants, different transmission elements can be associated with different priorities, which are then taken into account for the transmission. For instance, the preferred-UE-state indication is associated with a higher priority than the small data. Correspondingly, if the available granted resources are not enough to transmit both the small data and the preferred-UE-state indication, the UE prioritizes the indication and does not transmit all of the small data that is available for transmission.

Similarly, in case the control message or the buffer status report is to be transmitted as well, the preferred-UE-state indication is associated with a higher priority than this control message or buffer status report, which in turn however have a higher priority than the small data. In such a case, the following priorities would apply, where the higher priority is listed first:
1) preferred-UE-state indication
2) BSR
3) Small data

### Further Aspects

According to a first aspect, a user equipment, is provided that includes the following. A processor of the UE determines that transmission of small data is to be performed by the UE to a base station, wherein the UE is in an inactive state out of a connected state, an idle state and the inactive state. A transmitter of the UE performs transmission of the small data. The processor determines whether to transmit a preferred-UE-state indication to the base station, wherein the preferred-UE-state indication indicates the connected state to be the preferred UE-state of the UE. The determination whether to transmit the preferred-UE-state indication indicating a connected state is based on:
- a characteristic relating to the small data,

The transmitter, when the processor determines to transmit the preferred-UE-state indication, performs the transmission of the small data with the preferred-UE-state indication to the base station.

According to a second aspect provided in addition to the first aspect, the small-data-related characteristic, on which basis the determination to transmit the preferred-UE-state indication indicating the connected state is performed, is:
- a number of times per time period a transmission of the small data is performed by the UE.

According to a third aspect provided in addition to the second aspect, the number of times per time period is monitored by the processor, based on a small-data-transmission counter and a small-data-transmission timer. In an optional implementation, the small-data-transmission timer is started by the UE, when the UE starts with the transmission of the small data. In a further optional implementation, the small-data-transmission counter counts the number of transmissions of the small data. In a further optional implementation, the small-data-transmission counter is reset to 0, when the small-data-transmission timer expires.

According to a fourth aspect provided in addition to the second or third aspect, the processor counts a successful transmission of small data as one number of time of the small-data transmission. The processor counts an unsuccessful transmission of the small data also as one number of time of the small-data transmission, or the processor does not count an unsuccessful transmission of the small data as one number of time of the small-data transmission.

According to a fifth aspect, provided in addition to one of the second to fourth aspects, when the determined number of times per time period is greater than a threshold, the processor determines to transmit the preferred-UE-state indication indicating the connected state.

When the determined number of times per time period is not greater than a threshold, the processor determines to not transmit the preferred-UE-state indication indicating the connected state. In an optional implementation, the processor determines to transmit no preferred-UE-state indication or to transmit a preferred-UE-state indication indicating the inactive state as the preferred UE-state of the UE.

According to a sixth aspect, provided in addition to one of the second to fifth aspects, the UE supports a plurality of services, to which the small data can be related. A same common time period and a same common threshold on the number of times are applied for the plurality of services, or service-specific time periods are applied for the plurality of services, and a same common threshold on the number of times is applied for the plurality of services, or a same common time period is applied for the plurality of services, and service-specific thresholds on the number of times are applied for the plurality of services, or service-specific time periods and service-specific thresholds on the number of times are applied for the plurality of services. In an optional implementation, information on the service-specific time periods and the service-specific thresholds is received from the base station in a UE-dedicated message. In a further optional implementation, information on the same common time period and the same common threshold is received from the base station in system information.

According to a seventh aspect provided in addition to one of the first to sixth aspects, the small-data-related characteristic, on which basis the determination to transmit the preferred-UE-state indication indicating the connected state is performed, is a characteristic of the data carried by the small-data transmission. In an optional implementation, the characteristic of the data carried by the small-data transmission is one or more of:
- a priority of the data,
- a type of the data, and
- a typical incoming time interval expected for the data.

According to an eighth aspect provided in addition to one of the first to seventh aspects, the preferred-UE-state indication is transmitted:
- in a message of the Radio Resource Control, RRC, protocol, or
- in a control element of the Medium Access Control, MAC, protocol, or
- in a message for providing UE-assistance information, or
- as a preamble of a random access procedure, optionally wherein the processor, when in operation, determines a group of preambles associated with indicating the connected state as the preferred UE state and selects the preamble from the determined group of preambles.

According to a ninth aspect provided in addition to one of the first to eighth aspects, the UE further comprises a receiver, which receives from the base station a UE-state instruction, instructing the UE to transition to the connected state or to stay in the inactive state. The processor controls the UE state to be in accordance with the received UE-state instruction. In an optional implementation, the UE-state instruction is transmitted by the base station in response to the preferred-UE-state indication.

According to a tenth aspect provided in addition to one of the first to ninth aspects, the transmission of the small data and the preferred-UE-state indication takes into account priorities associated with the small data and the preferred-UE-state indication, wherein the preferred-UE-state indication is associated with a higher priority than the small data. In an optional implementation, the preferred-UE-state indication is associated with a higher priority than a buffer status report, also transmitted by the transmitter. In a further optional implementation, the buffer status report is associated with a higher priority than the small data.

According to an eleventh aspect, provided in addition to one of the first to the tenth aspects, the transmitter transmits at least a further indication to the base station, when performing the transmission of the small data and the preferred-UE-state indication. The further indication is one of:
- a DRX-related-preference indication, indicating the preference for a parameter of a Discontinued Reception, DRX, function performed by the UE, and
- a MIMO-related-preference indication, indicating a number of Multiple-In-Multiple-Out, MIMO, layers.

According to a twelfth aspect, provided in addition to one of the first to eleventh aspects, the active state, the connected state and the idle state are related to the Radio Resource Control, RRC, protocol.

According to a thirteenth aspect, provided in addition to one of the first to twelfth aspects, the transmission of the small data and the preferred-UE-state indication is performed as part of a random access procedure performed between the UE and the base station. In an optional implementation, the random access procedure includes two steps, wherein the transmission of the small data and the preferred-UE-state indication is performed with a first message of the two-step random access procedure. In a further optional implementation, the random access procedure includes four steps, wherein the transmission of the small data and the preferred-UE-state indication is performed with a third message of the four-step random access procedure.

According to a fourteenth aspect, a method is provided. The method comprises the following steps performed by a user equipment, UE:
determining that transmission of small data is to be performed by the UE to a base station, wherein the UE is in an inactive state out of a connected state, an idle state and the inactive state,
performing transmission of the small data,
determining whether to transmit a preferred-UE-state indication to the base station, wherein the preferred-UE-state indication indicates the connected state to be the preferred UE-state of the UE,
wherein the determination whether to transmit the preferred-UE-state indication indicating a connected state is based on:
   - a characteristic relating to the small data,
when the processor determines to transmit the preferred-UE-state indication, performing the transmission of the small data with the preferred-UE-state indication to the base station.

According to a fifteenth aspect, a base station is provided comprising the following. A receiver of the base station receives a transmission of small data from a user equipment, UE, wherein the UE is in an inactive state out of a connected state, an idle state and the inactive state. A processor of the base station determines whether to transition the UE from the inactive state to the connected state, based on a characteristic relating to the received small data. A transmitter of the base station transmits a UE-state instruction to the UE, instructing the UE to transition to the connected state, when determining to transition the UE to the connected state.

According to a sixteenth aspect, provided in addition to the fifteenth aspect, the small-data-related characteristic, on which basis the determination whether to transition the UE to the connected state is performed, is:
- a number of times per time period a reception of the small data is performed by the base station. In an optional implementation, the number of times per time period is monitored by the processor, based on a small-data-transmission counter and a small-data-transmission timer. In a further optional implementation, wherein the small-data-transmission timer is started by the base station, when the base station receives a first transmission of the small data, and wherein the small-data-transmission counter counts the number of receptions of the small data. In a further optional implementation, the small-data-transmission counter is reset to 0, when the small-data-transmission timer expires.

According to a seventeenth aspect, provided in addition to the fifteenth or sixteenth aspect, the small-data-related characteristic, on which basis the determination whether to transition the UE into the connected state is performed, is a characteristic of the data carried by the small-data transmission. In an optional implementation, the characteristic of the data carried by the small-data transmission is one or more of:
- a priority of the data,
- a type of the data, and
- a typical incoming time interval expected for the data.

According to an eighteenth aspect, provided in addition to any of the fifteenth to seventeenth aspects, the receiver receives from the UE a preferred-UE-state indication, indicating the connected state as the preferred UE state of the UE. In addition to or alternatively to using the characteristic relating to the received small data, the processor performs the determination of whether to transition the UE from the inactive state to the connected state, based on the received preferred-UE-state indication.

According to a nineteenth aspect, a method is provided, which comprises the following steps performed by a base station:
receiving a transmission of small data from a user equipment, UE, wherein the UE is in an inactive state out of a connected state, an idle state and the inactive state,
determining whether to transition the UE from the inactive state into the connected state, based on:
   - a characteristic relating to the received small data,
transmitting a UE-state instruction to the UE, instructing the UE to transition to the connected state, when determining to transition the UE to the connected state.

According to a twentieth aspect, an integrated circuit is provided which in operation, controls a process of a user equipment, the process comprising the following steps performed by the user equipment:
determining that transmission of small data is to be performed by the UE to a base station, wherein the UE is in an inactive state out of a connected state, an idle state and the inactive state,
performing transmission of the small data,
determining whether to transmit a preferred-UE-state indication to the base station, wherein the preferred-UE-state indication indicates the connected state to be the preferred UE-state of the UE,
wherein the determination whether to transmit the preferred-UE-state indication indicating a connected state is based on:
   - a characteristic relating to the small data,
when the processor determines to transmit the preferred-UE-state indication, performing the transmission of the small data with the preferred-UE-state indication to the base station.

According to a 21^{st} aspect, an integrated circuit is provided which in operation, controls a process of a base station, the process comprising the following steps performed by the base station:
receiving a transmission of small data from a user equipment, UE, wherein the UE is in an inactive state out of a connected state, an idle state and the inactive state,
determining whether to transition the UE from the inactive state into the connected state, based on:
   - a characteristic relating to the received small data,
transmitting a UE-state instruction to the UE, instructing the UE to transition to the connected state, when determining to transition the UE to the connected state.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g. cellular (cell) phone, smart phone), a tablet, a personal computer (PC) (e.g. laptop, desktop, netbook), a camera (e.g. digital still/video camera), a digital player (digital audio/video player), a wearable device (e.g. wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g. an appliance, lighting, smart meter, control panel), a vending machine, and any other "things" in a network of an "Internet of Things (loT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment, UE, comprising:
a processor, which in operation, determines that transmission of small data is to be performed by the UE to a base station, wherein the UE is in an inactive state out of a connected state, an idle state and the inactive state,
a transmitter, which in operation, performs transmission of the small data,
the processor, which in operation, determines whether to transmit a preferred-UE-state indication to the base station, wherein the preferred-UE-state indication indicates the connected state to be the preferred UE-state of the UE,
wherein the determination whether to transmit the preferred-UE-state indication indicating a connected state is based on:
• a characteristic relating to the small data,
the transmitter, which in operation and when the processor determines to transmit the preferred-UE-state indication, performs the transmission of the small data with the preferred-UE-state indication to the base station.

2. The UE according to claim 1, wherein the small-data-related characteristic, on which basis the determination to transmit the preferred-UE-state indication indicating the connected state is performed, is:
• a number of times per time period a transmission of the small data is performed by the UE.

3. The UE according to claim 2, wherein the number of times per time period is monitored by the processor, based on a small-data-transmission counter and a small-data-transmission timer,
optionally wherein the small-data-transmission timer is started by the UE, when the UE starts with the transmission of the small data,
optionally wherein the small-data-transmission counter counts the number of transmissions of the small data.
optionally wherein the small-data-transmission counter is reset to 0, when the small-data-transmission timer expires.

4. The UE according to claim 2 or 3, wherein the processor, when in operation, counts a successful transmission of small data as one number of time of the small-data transmission, and
wherein the processor, when in operation, counts an unsuccessful transmission of the small data also as one number of time of the small-data transmission, or
wherein the processor, when in operation, does not count an unsuccessful transmission of the small data as one number of time of the small-data transmission.

5. The UE according to any of claims 2 to 4, wherein,
when the determined number of times per time period is greater than a threshold, the processor determines to transmit the preferred-UE-state indication indicating the connected state, and
when the determined number of times per time period is not greater than a threshold,
• the processor determines to not transmit the preferred-UE-state indication indicating the connected state,
• optionally the processor determines to transmit no preferred-UE-state indication or to transmit a preferred-UE-state indication indicating the inactive state as the preferred UE-state of the UE.

6. The UE according to any of claims 2 to 5, wherein the UE supports a plurality of services, to which the small data can be related,
wherein a same common time period and a same common threshold on the number of times are applied for the plurality of services, or
wherein service-specific time periods are applied for the plurality of services, and a same common threshold on the number of times is applied for the plurality of services, or
wherein a same common time period is applied for the plurality of services, and service-specific thresholds on the number of times are applied for the plurality of services, or
wherein service-specific time periods and service-specific thresholds on the number of times are applied for the plurality of services,
optionally wherein information on the service-specific time periods and the service-specific thresholds is received from the base station in a UE-dedicated message, optionally wherein information on the same common time period and the same common threshold is received from the base station in system information.

7. The UE according to any of claims 1 to 6, wherein the small-data-related characteristic, on which basis the determination to transmit the preferred-UE-state indication indicating the connected state is performed, is:
• a characteristic of the data carried by the small-data transmission,
optionally wherein the characteristic of the data carried by the small-data transmission is one or more of:
• a priority of the data,
• a type of the data, and
• a typical incoming time interval expected for the data.

8. The UE according to any of claims 1 to 7, further comprising a receiver, which in operation, receives from the base station a UE-state instruction, instructing the UE to transition to the connected state or to stay in the inactive state,
wherein the processor, when in operation, controls the UE state to be in accordance with the received UE-state instruction, and
optionally wherein the UE-state instruction is transmitted by the base station in response to the preferred-UE-state indication.

9. The UE according to any of claims 1 to 8, wherein the transmission of the small data and the preferred-UE-state indication takes into account priorities associated with the small data and the preferred-UE-state indication, wherein the preferred-UE-state indication is associated with a higher priority than the small data,
optionally wherein the preferred-UE-state indication is associated with a higher priority than a buffer status report, also transmitted by the transmitter, optionally wherein the buffer status report is associated with a higher priority than the small data.

10. The UE according to any of claims 1 to 9, wherein the transmission of the small data and the preferred-UE-state indication is performed as part of a random access procedure performed between the UE and the base station,
optionally wherein the random access procedure includes two steps, wherein the transmission of the small data and the preferred-UE-state indication is performed with a first message of the two-step random access procedure,
optionally wherein the random access procedure includes four steps, wherein the transmission of the small data and the preferred-UE-state indication is performed with a third message of the four-step random access procedure.

11. A method comprising the following steps performed by a user equipment, UE:
determining that transmission of small data is to be performed by the UE to a base station, wherein the UE is in an inactive state out of a connected state, an idle state and the inactive state,
performing transmission of the small data,
determining whether to transmit a preferred-UE-state indication to the base station, wherein the preferred-UE-state indication indicates the connected state to be the preferred UE-state of the UE,
wherein the determination whether to transmit the preferred-UE-state indication indicating a connected state is based on:
• a characteristic relating to the small data,
when the processor determines to transmit the preferred-UE-state indication, performing the transmission of the small data with the preferred-UE-state indication to the base station.

12. A base station comprising:
a receiver, which in operation, receives a transmission of small data from a user equipment, UE, wherein the UE is in an inactive state out of a connected state, an idle state and the inactive state,
a processor, which in operation, determines whether to transition the UE from the inactive state to the connected state, based on:
• a characteristic relating to the received small data,
a transmitter, which in operation, transmits a UE-state instruction to the UE, instructing the UE to transition to the connected state, when determining to transition the UE to the connected state.

13. The base station according to claim 12, wherein the small-data-related characteristic, on which basis the determination whether to transition the UE to the connected state is performed, is:
• a number of times per time period a reception of the small data is performed by the base station,
optionally wherein the number of times per time period is monitored by the processor, based on a small-data-transmission counter and a small-data-transmission timer,
optionally wherein the small-data-transmission timer is started by the base station, when the base station receives a first transmission of the small data, and wherein the small-data-transmission counter counts the number of receptions of the small data,
optionally wherein the small-data-transmission counter is reset to 0, when the small-data-transmission timer expires.

14. The base station according to claim 12 or 13, wherein the small-data-related characteristic, on which basis the determination whether to transition the UE into the connected state is performed, is:
• a characteristic of the data carried by the small-data transmission,
optionally wherein the characteristic of the data carried by the small-data transmission is one or more of:
• a priority of the data,
• a type of the data, and
• a typical incoming time interval expected for the data.

15. The base station according to any of claims 12 to 14, wherein the receiver, when in operation, receives from the UE a preferred-UE-state indication, indicating the connected state as the preferred UE state of the UE,
wherein, in addition to or alternatively to using the characteristic relating to the received small data, the processor, when in operation, performs the determination of whether to transition the UE from the inactive state to the connected state, based on the received preferred-UE-state indication.
